(19) **Europäisches Patentamt / European Patent Office / Office européen des brevets**

(11) **EP 4 605 245 B1**

(12) **EUROPEAN PATENT SPECIFICATION**

(45) Date of publication and mention
of the grant of the patent:
**24.06.2026 Bulletin 2026/26**

(21) Application number: **23789574.3**

(22) Date of filing: **10.10.2023**

(51) International Patent Classification (IPC):
***B41J 2/21*** *(2006.01)* ***G06K 15/02*** *(2006.01)*

(52) Cooperative Patent Classification (CPC):
**B41J 2/2135; G06K 15/027**

(86) International application number:
**PCT/EP2023/078095**

(87) International publication number:
**WO 2024/083581 (25.04.2024 Gazette 2024/17)**

(54) **IMAGE-FORMING DEVICE AND METHOD OF OPERATION THEREOF**

BILDERZEUGUNGSVORRICHTUNG UND BETRIEBSVERFAHREN DAFÜR

DISPOSITIF DE FORMATION D'IMAGES ET SON PROCÉDÉ DE FONCTIONNEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.10.2022 EP 22201944**

(43) Date of publication of application:
**27.08.2025 Bulletin 2025/35**

(73) Proprietor: **Canon Production Printing Holding
B.V.
5914 HH Venlo (NL)**

(72) Inventor: **VAN BEKKEM, Johannes M.
5914 HH Venlo (NL)**

(74) Representative: **Canon Production Printing IP
Department
Canon Production Printing Netherlands B.V.
Van der Grintenstraat 10
5914 HH Venlo (NL)**

(56) References cited:
JP-A- 2012 071 474      US-A1- 2011 007 371
US-A1- 2017 182 824

**Description**

FIELD OF THE INVENTION

The present invention relates to calibration in image-forming devices such as printer devices with built-in scanner units, and in particular to a calibration based on self-generated reference patterns, i.e. reference patterns entirely generated by the printer device and the scanner unit, through which the orientation of a scanner unit in a printer can be determined and a corresponding calibration method for the printer device can be implemented.

BACKGROUND OF THE INVENTION

Technological developments in the recent years relating to printing devices have provided a number of methods to increase both the printing quality and the printing speed.

The document JP 2012 071474 A discloses a method for calibrating an image forming device according to the preamble of claim 1 and a corresponding image forming device.

In all of these methods it is essential to have an accurate determination of the position of the different printing elements involved, in particular the nozzles through which the marking material, e.g. ink, is expelled as droplets. With resolutions of 1200 dots per inch (dpi), the typical distance between the droplets is of order $10^{-5}$ m.

In typical inkjet printers, these nozzles are arranged in arrays, with a number of rows and columns, and arranged on a nozzle surface of a print head. With resolutions of 1200 dpi, it is advantageous to know the positions of the nozzles with an accuracy of order $10^{-5}$ m or higher, preferably of a few microns.

In order to detect the positions of the nozzles some image-forming devices printer incorporate an image sensor device, either a so-called Contact Image Sensor or CIS-array, which contains a plurality of imaging sensors chips, such as CCD-chips or CMOS-chips or a reduction type linear sensor. These image sensor devices are endowed with reading and measuring means, such that the image sensor device can be used to image and analyze a predetermined reference pattern, from which analysis the positions of the nozzles can be determined and, in case of misalignment, the positions nozzle arrays or even of the individual nozzles can be adjusted or firing moments of individual nozzles can be adjusted to correct for the misalignment.

This strategy to calibrate the nozzle arrays of a print head with an on-site image sensor device requires that the image sensor device itself be adjusted to tolerances of, at least, around the micron.

There are several disclosures that deal with the adjustment of such an image sensor device in order to calibrate the ink nozzles of a printing device.

US 6263117 B1, for example, discloses a method to calibrate the different sensor chips of a scanner, where an external test image is read by the scanner and the resulting product is processed by an application program that measures distances in the scanned image. The data obtained is stored and the scanner is calibrated based on the measured distances.

Methods have been disclosed in the past that use more than one test target for a scanner calibration. US 2012/0200632 describes a method to calibrate a scanner, where a test target is imaged by the scanner to produce two image target components that are associated. An analysis of the correlation between the two images allows one to determine the relative orientation thereof, which is related to the misalignment of the imaging elements that comprise the scanner.

In a similar manner, in DE 10 2019 106 548 A1 at least two printed patterns are considered, from which geometrical information can be extracted, combined, and compared with some reference set points. The detected differences are then used to calibrate the scanner.

In US 2019/0166274 A1, a method for the alignment of the sensor chips of a reading device installed in a printer is disclosed. The method is based on the determination of the distances of a plurality of sensor chips to a reference pattern in two orthogonal directions.

EP 1 503 573 B1 discloses a method to calibrate a set of optical detectors which are mounted in print carriages to detect potential misalignments of the constituent parts of a print carriage. According to the method, the printer can be in a normal printing operation and in a service operation. The latter takes places in a service area, where target patches can be imaged by the optical detectors, from which information is extracted for their calibration.

SUMMARY OF THE INVENTION

It is an object of the present invention to provide a method for calibrating an image-forming device and an image-forming device suitable for performing said method with a sensor unit, wherein knowledge of the relevant parameters for the calibration of the image-forming device (i.e. orientation of the sensor unit and/or position of the nozzles) can be achieved without resource to external reference test markers.

This object is achieved by the method of claim 1 with the aid of the image-forming device of claim 12. Preferred embodiments of the invention with advantageous features are given in the dependent claims.

In a first aspect, the invention relates to a method for calibrating an image forming device comprising at least one print head comprising a plurality of nozzles arranged in a plurality of nozzle rows, the plurality of nozzle rows comprises a first row of nozzles and a second row of nozzles, the first row of nozzles and second row of nozzles being substantially parallel to one another, the image forming device comprises a sensor unit extending in a first direction and configured to read (scan) information from a recording medium (typically paper) on a working area, the sensor unit and the first row of nozzles and second row of nozzles are arranged at fixed positions relative to one another, the first direction being substantially parallel to the first row of nozzles and to the second row of nozzles, the method comprising the steps of:

a) providing the recording medium on the working area;

b) printing reference pattern comprising a plurality of dots by simultaneously activating a preselected set of nozzles, the preselected nozzles at least including a first nozzle n1 and a second nozzle n2 being arranged at each opposing end of the first row of nozzles and a third nozzle n3 being arranged at one end of the second row of nozzles, the one end of the second row of nozzles being the end closest to the first nozzle (n1) of the first row of nozzles;

c) scanning the printed image of a plurality of dots at least including a first dot d1 printed with the first nozzle n1, a second dot d2 printed with the second nozzle n2, a third dot d3 printed with the third nozzle n3;

d) determining the relative positions of the plurality of dots relative to an internal reference orthogonal coordinate system (X,Y): d1 = (X1,Y1), d2 = (X2,Y2) and d3 = (X3,Y3), wherein X1, X2 and X3 are X-coordinates and Y1, Y2 and Y3 are Y-coordinates of dots d1, d2 and d3 respectively;

e) determining the position vectors of the second dot d2, $\vec{u} = (u1, u2)$ and the third dot d3, $\vec{v} = (v1, v2)$, relative to the first dot d1 and relative to the internal reference orthogonal coordinate system (X,Y), wherein u1=x2-x1, u2=y2-y1, v1=x3-x1 and v2=y3-y1;

f) calculating the misalignment Rz of the sensor unit relative to first row of nozzles and the second row of nozzles according to formula: $Rz = 90° - arccos\left(\frac{\vec{u}.\vec{v}}{|\vec{u}||\vec{v}|}\right)$, wherein $\vec{u}.\vec{v}$ is the dot product of the position vectors $\vec{u}$ and $\vec{v}$,

which equals u1*v1+u2*v2 and wherein $|\vec{u}| = \sqrt{u1^2 + u2^2}$ and $|\vec{v}| = \sqrt{v1^2 + v2^2}$.

Here and in the following a recording medium is understood as any material susceptible of receiving the marking material (typically ink) by the nozzles. Typical recording mediums are paper sheets, paper rolls or foil.

The working area is a supporting surface where the material to be scanned can be placed. It can be e.g. a glass surface, like in most consumer printers, or a metallic support, like in some large-format printers.

The sensor unit (also scanner unit or simply scanner) is an element that consists of optical and image sensors, which are arranged such that they define the first direction (e.g. in reduction linear type sensors) or inserted in compact modules which are abutted along the first direction (e.g. in compact image sensors).

The reference pattern can be in its simplest form a printed image of the selected nozzles, which can be generated by a simultaneous activation of the selected nozzles once. The selection of the nozzles can be a statistically representative sample among nozzle arrays performed, for instance, by a randomizer in the controller unit. Alternatively, the selection of the nozzles can be performed manually by a selection of certain particular nozzles. In either case, a reliable identification of nozzle rows from the set of selected nozzles belonging to each row should be possible. In the context of the present invention the preselected nozzles must at least include a first nozzle n1 and a second nozzle n2 being arranged at each opposing end of the first row of nozzles and a third nozzle n3 being arranged at one end of the second row of nozzles, because these nozzles define boundaries of the nozzle rows.

The aforementioned nozzle rows should be understood as the approximate pattern of lines that the arrangement of the plurality of nozzles define.

An internal reference coordinate system refers to a reference system intrinsic to the acquired image, either as a whole or in terms of any of its elements. For instance, an internal reference coordinate system could be determined by the orientation of the sides of the acquired image (e.g., detected edges of the recording medium), or of any detected row of dots (also termed imaged nozzle rows). In other words, such an internal reference coordinate system can be self-consistently defined with the information available from the acquired image, and it is independent of, e.g., the printing direction, which should be considered an external reference element.

In the context of the present invention the internal reference coordinate system is indicated with capitals (including dot coordinates) : X and Y.

For the purpose of the present invention it is to be understood that in principle the sensor unit and the first row of nozzles and second row of nozzles are arranged at fixed positions relative to one another and mechanically aligned such that the first direction is substantially parallel to the first row of nozzles and to the second row of nozzles. However, misalignments between the sensor unit and the first row of nozzles and the second row of nozzles may occur. The method of the present invention relates to detecting and calculating such misalignment without the necessity for an external reference.

For the purpose of the invention it is also to be understood that there is a difference between a printed image (i.e. real image, which can be visually observed) and a scanned image, because misalignment of the sensor unit adds error to the detection of the printed image that is not really present and needs not be compensated for. It is a purpose of the present invention to eliminate misalignment error of the sensor unit from the compensation scheme used for compensating misalignment of nozzles relative to one another or rows of nozzles relative to one another.

Therefore, in this aspect the invention provides a method for operating an image-forming device, comprising the following steps: (I) generating a reference pattern on a recording medium with a marking material by activating a set of selected nozzles arranged in nozzle rows on at least one printhead of the image-forming device to eject the marking material; (II) acquiring an image of the generated reference pattern on the recording medium of the image-forming device; (III) identifying the imaged nozzles rows from the imaged marking material within the acquired image; (IV) determining a relative orientation of at least one of the imaged nozzle rows with respect to an internal reference coordinate system; and (V) determining the misalignment Rz of the sensing unit.

From the above it can be deduced that the problem to be solved by the present invention is to determine misalignment Rz of the sensing unit from a scanned image in which the misalignment of the sensing unit (scanner) and the (at least one) print head are combined in the scanned image. The misalignment of the sensing unit (scanner) only adds detection error, which is not actually present in the printed image and for which no (firing) correction is required. Normally an external reference is required to correct for misalignment of the sensing unit (scanner).

In the present invention this problem is solved by carefully selecting firing nozzles of a single print head (for which nozzles the positions are fixed relative to one another), such that a pattern is printed that ideally forms a rectangle. The rectangle is rotated due to misalignment of the print head and distorted (into a trapezoid) due to misalignment of the sensing unit (scanner). The misalignments of the sensing unit (scanner) and the print head respectively can be separately determined by determining the shape of the formed image with each printhead. The misalignment Rz of the sensing unit can be determined without using an external reference marker.

In a further embodiment or step, the misalignments of the printheads relative to one another can be determined by eliminating the misalignment of the sensing unit (scanner) from the total misalignment, such that the misalignments of the printheads relative to one on another can be corrected for e.g. by adjusting the timing of firing individual nozzles.

In an embodiment, the calculation of the misalignment Rz of the sensor unit relative to the first row of nozzles and the second row of nozzles is performed with the following sub-steps:

f1) calculating

$$Rz1 = arctan\left(\frac{Y2-Y1}{X2-X1}\right);$$

f2) calculating

$$Rz2 = arctan\left(\frac{X3-X1}{Y3-Y1}\right);$$

f3) calculating

$$Rz = Rz1 + Rz2$$

In an embodiment, in the printing step b) the preselected set of nozzles comprises a first subset S1 of nozzles arranged in the first row of nozzles and a second subset S2 of nozzles arranged in the second row of nozzles, wherein a first row of dots is printed by the first row of nozzles and a second row of dots is printed by the second row of nozzles and wherein the method comprises a step d1) performed directly after step d) comprising fitting a first straight line l1 through the first row of dots and a second straight line l2 through the second row of dots with the aid of linear regression followed by correcting the relative Y-positions of the detected dots of the first row with the first straight line l1 and by correcting the relative Y-positions of the detected dots of the second row of dots with the second straight line l2, wherein step d1 is performed prior to step e) and wherein step e) is performed with the corrected relative positions of the detected dots.

In this embodiment, the first row of dots and the second row of dots (also referred to as imaged nozzle rows) are to be understood as an approximate pattern of lines of the arrangement of the imaged droplets (dots) associated with the nozzles in the reference image acquired by the sensor unit. In general, the image droplets (dots) originating from an array of nozzles can show a certain dispersion, caused by misalignments in the ejection angles of the different nozzles.

Therefore, the identification of the imaged nozzle rows by the sensor unit from the imaged marking material of the reference image is achieved by performing a set of linear regressions (i.e. fitting of straight lines (l1 and l2) through the first row of dots and the second row of dots respectively).

In an embodiment all method steps are repeated for all substantially parallel pairs of rows of nozzles and calculating the average Rz.

In an embodiment the internal reference orthogonal coordinate system (X,Y) is determined by a reference row of dots printed with a reference row of nozzles, wherein the reference row of dots extends in the X-direction and defines the X-axis of the internal reference orthogonal coordinate system (X,Y), wherein the Y-axis extends in a direction perpendicular to the X-axis.

In an embodiment, the reference row of nozzles comprises one row of nozzles selected from the plurality of nozzle rows (a1-a8).

In an embodiment, the internal orthogonal coordinate system (X,Y) is defined by the boundaries of the acquired image.

In an embodiment the boundaries of the acquired image comprise the edges of the recording medium.

In an embodiment, the image forming device is a page-wide array printer comprising a page-wide array of at least one print head and a page wide sensing unit, wherein the trailing edge of the print medium defines the X-axis of the internal orthogonal coordinate system (X,Y) and wherein the Y-axis extends in a direction perpendicular to the X-axis.

In an embodiment, the image forming device is a scanning printer comprising a carriage comprising the at least one printhead and the sensing unit, the image is formed by a reciprocating motion of the carriage across the recording medium, wherein the trailing edge of the print medium defines the Y-axis of the internal orthogonal coordinate system (X,Y) and wherein the X-axis extends in a direction perpendicular to the Y-axis.

In an embodiment, the method according to the present invention further comprises the steps of:

g) determining the real relative positions of the plurality of dots relative to the internal reference orthogonal coordinate system (X,Y) by performing a correction for the misalignment (Rz) of the sensor unit;

h) compare the real relative positions of the plurality of dots with the expected relative positions of the dots;

i) determine timing corrections for the activation of each individual nozzle of the plurality of nozzles corresponding to the respective individual dot of the plurality of dots to minimize the difference between the real relative position of said individual dot and the expected position of said individual dot;

This embodiment relates to compensation of the positional errors of printed dots wherein the term real relative position is to be construed as the detected relative position corrected for the error of the misalignment of the sensor unit and the expected relative position is to be construed as a relative position of (individual) dots derived from an image bitmap or as intended relative position.

Therefore this embodiment relates to a method described above comprising in addition to steps I - V, (VI) outputting a calibration signal to adjust the ejection of marking material by the nozzles based on the determined relative orientation.

In another aspect, the invention relates to an image-forming device suitable for performing a method according to the present invention. The image-forming device comprises:

- at least one print head comprising a plurality of nozzles arranged in a plurality of nozzle rows, the plurality of nozzle rows comprises a first row of nozzles and a second row of nozzles, the first row of nozzles and second row of nozzles being substantially parallel to one another;

- a sensor unit extending in a first direction and configured to read (scan) information from a recording medium placed on a working area,

the sensor unit and the first row of nozzles and second row of nozzles are arranged at fixed positions relative to one another, the first direction being substantially parallel to the first row of nozzles and to the second row of nozzles, the image-forming device further comprises:

- a controller unit, which is configured to control ejection of marking material by the nozzles onto the recording medium;

wherein:

the controller unit is configured to simultaneously activate a preselected set of nozzles, the preselected nozzles at least includes a first nozzle n1 and a second nozzle n2 being arranged at each opposing end of the first row of nozzles and a third nozzle n3 being arranged at one end of the second row of nozzles, the one end of the second row of nozzle being the end closest to the first nozzle n1 of the first row, to eject marking material onto the recording medium, thereby generating a reference pattern which the sensor unit is configured to capture as a reference image, wherein the sensor unit is further configured to identify the printed image of a plurality of dots at least including a first dot d1 printed with the first nozzle n1, a second dot d2 printed with the second nozzle n2, a third dot d3 printed with the third nozzle n3, wherein the controller unit is configured to

a) determine the relative positions of the plurality of dots relative to an internal reference orthogonal coordinate system (X,Y): d1 = (x1,y1), d2 = (x2,y2) and d3 = (x3,y3), wherein x1, x2 and x3 are x-coordinates and y1, y2 and y3 are y-coordinates of dots d1, d2 and d3 respectively;

b) determine the position vectors of the second dot d2: $\vec{u} = (u1, u2)$ and the third dot d3, $\vec{v} = (v1, v2)$, relative to the first dot d1 and relative to the internal reference orthogonal coordinate system (X,Y), wherein u1=x2-x1, u2=y2-y1, v1=x3-x1 and v2=y3-y1;

c) calculate the misalignment Rz of the sensor unit relative to first row of nozzles and the second row of nozzles:

$$Rz = 90° - arccos\left(\frac{\vec{u}.\vec{v}}{|\vec{u}||\vec{v}|}\right)$$, wherein $\vec{u}.\vec{v}$ is the dot product of the position vectors $\vec{u}$ and $\vec{v}$, which equals

u1*v1+u2*v2 and wherein $|\vec{u}| = \sqrt{u1^2 + u2^2}$ and $|\vec{v}| = \sqrt{v1^2 + v2^2}$.

In an embodiment, the controller unit is further configured for performing a method according to any embodiment of the first aspect of the present invention.

In an embodiment, the controller unit is further configured for outputting timing corrections for the activation of each individual nozzle of the plurality of nozzles as determined in step i) as disclosed above.

In an embodiment, the at least one print head comprises at least one print head chip, the at least one print head chip comprises at least the first row of nozzles and the second row of nozzles, the first row of nozzles and second row of nozzles being substantially parallel to one another.

In this embodiment, the first row of nozzles and the second row of nozzles are substantially parallel to one another by virtue of the design of the print head chip and the manufacturing thereof: the relative positions of the first row of nozzles and the second row of nozzles are fixed relative to one another, because both the first row of nozzles and the second row of nozzles are inseparable parts of a single print head chip.

In this embodiment, the invention provides an image-forming device comprising a sensor unit, which is configured to read (scan) information from a recording medium (typically paper) placed on a working area, at least one printhead with at least one printhead chip containing a plurality of nozzles arranged in nozzle rows (also referable to as nozzle arrays, nozzle columns or nozzle lines), and a controller unit, which is configured to control ejection of marking material (typically ink) by the nozzles onto the recording medium, wherein the controller unit is configured to activate a set of selected nozzles of the at least one printhead chip to eject marking material onto the recording medium, thereby generating a reference pattern which the sensor unit is configured to capture as a reference image, wherein the sensor unit is further configured to identify imaged nozzle rows within the reference image (rows of dots) and to determine a relative orientation of at least one of the imaged nozzles rows with respect to an internal reference coordinate system, from which the misalignment Rz of the sensor unit can be calculated in accordance with a method according to the first aspect of the present invention.

In an embodiment, the controller unit is further configured to output a calibration signal to adjust the ejection of marking material by the nozzles based on the determined relative orientation. The output signal is based on the detected relative positions of the printed dots, wherein the artefact of misalignment of the sensor unit is eliminated and a correction for the misalignment of the rows of nozzles relative to one another is provided.

In particular, the method according to the first aspect of the invention may be carried out with the image-forming device according to the second aspect of the invention. The features and advantages disclosed herein in connection with the image-forming device are therefore also disclosed for the method, and vice versa.

According to a third aspect, the invention provides a computer program product comprising executable program code configured to, when executed, perform the method according to the first aspect of the present invention.

According to a fourth aspect, the invention provides a non-transient computer-readable data storage medium comprising executable program code configured to, when executed, perform the method according to the first aspect of the present invention.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

According to a fifth aspect, the invention provides a data stream comprising, or configured to generate, executable program code configured to, when executed, perform the method according to the first aspect of the present invention.

One of the main ideas underlying the present invention is to provide an image-forming device, such as a printer, preferably an inkjet printer, with a sensor unit with reading (scanning) and measuring means, where the sensor unit can be used to calibrate the printer without resorting to external reference patterns. This can be achieved once the misalignment (or: skewness; or: tilt) of the sensor unit with respect to the nozzle arrays is known. The misalignment of the sensor unit with respect to the nozzle rows is determined by configuring the same sensor unit to image (i.e. scan) a reference pattern generated from a number of selected nozzles in the nozzle arrays. This results, after a linear regression is performed, in a set of imaged nozzle arrays which, as a result of the misalignment of the sensor unit, will be skewed with respect to the nozzle arrays from which they originated. The misalignment of the sensor unit can be determined from the relative orientation of the imaged nozzle arrays. In other words, the tilt of the sensor unit is determined through the analysis of an acquired image generated by the nozzles, regardless of whether the printheads or in particular the print head chips are calibrated, i.e. they do not have a tilt, or not. Once the skewness of the sensor unit is known, it can be used to determine the positions of the nozzle arrays reliably, with a corresponding improvement on the printing quality of the device.

The device as described above affords a simple implementation of a method to determine the skewness of the sensor unit. As an initial step, a simple reference pattern is printed by activating a number of nozzles on a printhead or in particular on a print head chip. By a simple pattern it is here meant a pattern from which the marking material of the acquired image of the generated reference pattern can be traced back to the selected nozzles they were ejected from. As a next step, the sensor unit is used to acquire an image of the printed reference pattern. Based on an analysis of the image, the relative orientation of the nozzle arrays in the imaged reference pattern is determined, from which information about the misalignment of the sensor unit can be extracted. This information can then be used to calibrate the printer, e.g. by adjusting the ejection times of the different nozzles.

One advantage of the present invention is that one can determine (and correct for) the skewness of the sensor unit using a reference pattern stemming solely from internal elements of the image-forming device. This presents a number of advantages with respect to using external reference patterns for the same purpose. Relying on an external reference pattern can introduce extra uncertainties, e.g. an uncertainty in the printing direction (i.e. the external reference pattern might introduce an extra tilt) or pollution due to ink mist of the printer used to generate the pattern. It might also depend on the geometry of the printer, which might preclude its use for different printer models. Besides avoiding the aforementioned shortcomings, an internal reference pattern has the extra advantage that it can be generated whenever needed, i.e. there is no need to store it or ask the manufacturer for an additional copy in case of loss.

Another advantage of the present invention is that the internal elements used to generate the reference pattern do not need to be calibrated themselves. The lack of calibration of the nozzles has no effect on the determination of the misalignment of the sensor unit. This is particularly important, because it means that the skewness of the sensor unit can be determined without any reference e.g. to the printing direction.

A further advantage of the present invention is that, since the adjustments and calibrations take place without the need of external input, the whole process of compensation for the skewness of the sensor unit and calibration of the image-forming device can be automated and straightforwardly repeated whenever needed.

Advantageous embodiments and further developments follow from the dependent claims as well as from the description of the different preferred embodiments illustrated in the accompanying figures.

According to some of the embodiments, the internal reference coordinate system has orthogonal axes, and is arranged such that a first axis of the orthogonal axes is defined by at least one imaged nozzle row (i.e. row of dots originating from a row of nozzles), and a second axis of the orthogonal axes is perpendicular thereto. The choice of reference imaged nozzle row is arbitrary. The orientations of the remaining imaged nozzle rows are to be determined relative to the reference imaged nozzle row. The calibration signal may compensate the skewness of the nozzle arrays with respect to the reference nozzle array (defined as the nozzle array that originates the reference imaged nozzle row), without compensating for the misalignment (skewness) of the sensor unit, because the misalignment of the sensor unit results in an artefact that is only present in the scanned image but not in the printed image. This choice of internal reference frame makes it manifest that the calibration proposed in the present invention does indeed rely entirely on internal elements generated from the image-forming device itself. For this same reason, printing images after calibration will have the skewness of the reference nozzle array. In order to correct for this overall skewness an external reference is required, e.g. the orientation of the reference nozzle array with respect to the printing direction. The latter is also termed image-to-sheet registration and is outside the scope of the present invention.

According to some of the embodiments, the internal reference coordinate system has orthogonal axes which are defined by the boundaries of the acquired image. This is also a rather natural choice of reference frame. Quite generally, the relevant objects for the invention are the relative orientations of the imaged nozzle rows. This relative orientation does not depend on the choice of coordinate axes, but certain choices have been found by the inventor to turn out to be more convenient than others.

According to some of the embodiments, the controller unit comprises a measuring module and a database, wherein the measuring module is configured to measure the positions of the ejected imaged marking material by the activated nozzles (dots) in the image of the reference pattern and store the measured positions in the database. The position coordinates can be determined in the aforementioned reference frames or in a different internal reference frame of the measuring module. As already mentioned above, the measurements do not need to be referred to directions defined by elements external to the sensor unit, e.g. the printing direction.

Although here, in the foregoing and also in the following, some functions are described as being performed by modules, it shall be understood that this does not necessarily mean that such modules are provided as entities separate from one another. In cases where one or more modules are provided as software, the modules may be implemented by program code sections or program code snippets, which may be distinct from one another but which, may also be interwoven or integrated into one another.

Similarly, in cases where one or more modules are provided as hardware, the functions of one or more modules may be provided by one and the same hardware component, or the functions of several modules may be distributed over several hardware components, which need not necessarily correspond to the modules. Thus, any apparatus, system, method and so on which exhibits all of the features and functions ascribed to a specific module shall be understood to comprise, or implement, said module. In particular, it is a possibility that all modules are implemented by program code executed by the computing device, for example a server or a cloud computing platform.

According to some of the embodiments, the controller unit comprises a data-processing module, configured to take as input the measured positions stored in the database and generate as output an angle Rz1, indicating a tilt of the imaged nozzle rows of a printhead chip in the acquired image of the generated reference pattern with respect to the first axis (X-axis), and/or an angle Rz2, which is defined by the line that joins the tips of the imaged nozzle rows of a printhead chip in the acquired image of the generated reference pattern with respect to the second axis (Y-axis), wherein the controller unit is configured to output a correction signal based on a misalignment angle Rz, wherein this misalignment angle Rz is based on a difference between Rz1 and Rz2.

The data-processing module can perform a linear regression of the imaged ink droplets (dots) associated with a nozzle array, thereby determining the best-fit lines that join the imaged ink droplet points in rows and columns. From these lines one can then calculate Rz1 and Rz2. For the determination of Rz1 at least one imaged nozzle array is required. For the determination of Rz2 at least two imaged nozzle arrays of a printhead chip are required. Clearly, the more ink dots that are analyzed, the better the statistics and the higher the accuracy with which the angles Rz1, Rz2 and Rz can be determined.

According to some of the embodiments, the controller unit comprises a calibration module configured to adjust, based on the detected relative dot positions corrected for the misalignment angle Rz of the detection unit, an ejection time of the marking material through the nozzles. This adjustment in ejection time compensates for the relative skewness of the nozzle arrays and brings the nozzle arrays parallel to the reference nozzle array.

According to some of the embodiments, the sensor unit and the at least one printhead are mounted on a printer carriage, which is attached to a guide, wherein the guide is configured to carry the sensor unit and the at least one printhead along a y-direction perpendicular to an x-direction, wherein the x-direction is the direction along which printing material moves (printing direction). In these embodiments, the scanning and printing take place by swathing the printer carriage along the y-direction (in these embodiments also referred to as swathing direction) in order to cover the full working area of the printer.

According to some of the embodiments, the controller unit is configured to activate a set of selected nozzles for generating a first reference pattern on a recording medium by the at least one printhead or print head chip moving in a first direction along the y-axis of the image-forming device, and a second reference pattern on a recording medium (optionally the same recording medium) by the at least one printhead chip moving in the opposite direction along the y-axis. The sensor unit is configured to acquire an image of the first generated reference pattern and an image of the second generated reference pattern. The measuring module is then configured to measure the position of the imaged marking material ejected by the activated nozzles from the first acquired image and from the second acquired image, wherein the database is configured to store the measured positions. The data-processing module is configured to output the angles Rz1 and Rz2 based on an average of the measured positions acquired from the first acquired image and the second acquired image. Stated in other terms, two reference patterns are generated by activating the same set of selected nozzles, the only difference between both patterns being, that they are generated using a different swathing direction. Averaging out the two patterns reduces, for instance, the impact of potential differences in the speed ejection of the nozzles, which is a systematic effect in the determination of the nozzle positions.

According to some of the embodiments, the sensor unit, and a plurality of printheads are arranged to stretch along the whole working area in an x-direction perpendicular to an y-direction, and the image forming is performed by moving the printing material along the x-direction. In other words, the invention also applies to printers with page-wide arrays, where the printheads and the scanner unit are static, i.e. they do not move in swaths, and the recording material moves under them.

According to some of the embodiments, the length of the nozzle lines in the printhead (chip) may be between 1 cm and 5 cm, preferably between 2 cm and 2.5 cm. The last numbers are comparable to the array lengths used in large format printing.

According to some of the embodiments, at least one printhead contains a plurality of printhead chips centered at different positions on the printhead along a printing direction. Since the invention relies on a reference pattern generated by the same printhead chips, the principle for the determination of the misalignment of the sensor unit does not depend on the number and sizes of the printhead chips.

According to some of the embodiments, each printhead contains a single printhead chip. Some printers have printheads with this configuration. The idea of the invention applies to them as well.

The principles of the present invention are rather general and apply to several arrangements of printhead, printhead chips and nozzles arrays. Generalizations to other embodiments are therefore straightforward. For instance, some printheads contain more than one printhead chip, each with different shapes for the nozzle lines. In this case, one should determine the relevant angles Rz1 and Rz2 working with the printhead chips of different shapes separately and, optionally, averaging out the results at the end to increase the accuracy. Some other printers might contain multiple printheads sequentially arranged in rows along the printing direction. The principle of the invention can be used also with these configurations.

According to some of the embodiments, one of the axes of the internal reference frame is aligned with a printing direction. We have mentioned in the foregoing that the calibration of nozzle arrays, i.e. the compensation of the skewness of the nozzle arrays is done with respect to a nozzle reference array. This nozzle reference array can have a misalignment or skewness with respect to the printing direction. As a result, the printing products will appear with an overall skewness. This can be corrected if the printing direction is known.

According to some of the embodiments, the method for operating an image-forming device comprises the step of determining a skewness of a sensor unit of the image-forming device, the sensor unit being used for acquiring the image.

The above embodiments and implementations can be combined with each other as desired, as far as this is reasonable.

Further scope of the applicability of the present method and apparatus will become apparent from the following figures, detailed description, and claims.

BRIEF DESCRIPTION OF THE DRAWINGS

Aspects of the present disclosure will be better understood with reference to the following figures. The components in the drawings are not necessarily to scale, emphasis being placed instead upon clearly illustrating the principles of the present disclosure. Parts in the different figures that correspond to the same elements have been tagged with the same reference numerals in the figures.

Fig. 1 is a schematic depiction of an image-sensor device according to an embodiment of the present invention;

Fig. 2 is a schematic depiction of an image-sensor device according to another embodiment of the present invention;

Fig. 3 is a schematic depiction of a sensor unit and printhead chips according to an embodiment of the present invention, where the misalignments relevant for the invention are illustrated;

Fig. 4 is a schematic illustration of an acquired image of a reference pattern generated according to an embodiment of the present invention;

Fig. 5 is a schematic illustration of an acquired image of a reference pattern generated according to another embodiment of the present invention;

Fig. 6A is a schematic illustration of an acquired image in a first scenario of orientation of a sensor unit 1 and two rows of nozzles;

Fig. 6B is a schematic illustration of an acquired image in a second scenario of orientation of a sensor unit 1 and two rows of nozzles;

Fig. 6C is a schematic illustration of an acquired image in a third scenario of orientation of a sensor unit 1 and two rows of nozzles;

Fig. 6D is a schematic illustration of an acquired image in a fourth scenario of orientation of a sensor unit 1 and two rows of nozzles;

Fig. 7 is a schematic illustration of an acquired image in a first scenario of orientation of a sensor unit 1 and two rows of nozzles;

Fig. 8 is a block diagram showing an exemplary embodiment of the calibration method;

Fig. 9 is a schematic block diagram illustrating a computer program product according to an embodiment of the third aspect of the present invention; and

Fig. 10 is a schematic block diagram illustrating a non-transitory computer-readable data storage medium according to an embodiment of the fourth aspect of the present invention.

The figures might not be to scale, and certain components can be shown in generalized or schematic form in the interest of clarity and conciseness. In some instances, well-known structures and devices are shown in block diagram form in order to avoid obscuring the concepts of the present invention. Likewise, the numeration of the steps in the methods are meant to ease their description. They do not necessarily imply a certain ordering of the steps. In particular, several steps may be performed concurrently.

DETAILED DESCRIPTION

The detailed description includes specific details for the purpose of providing a thorough understanding of the present invention. However, it will be apparent to those skilled in the art that the present invention may be practiced without these specific details.

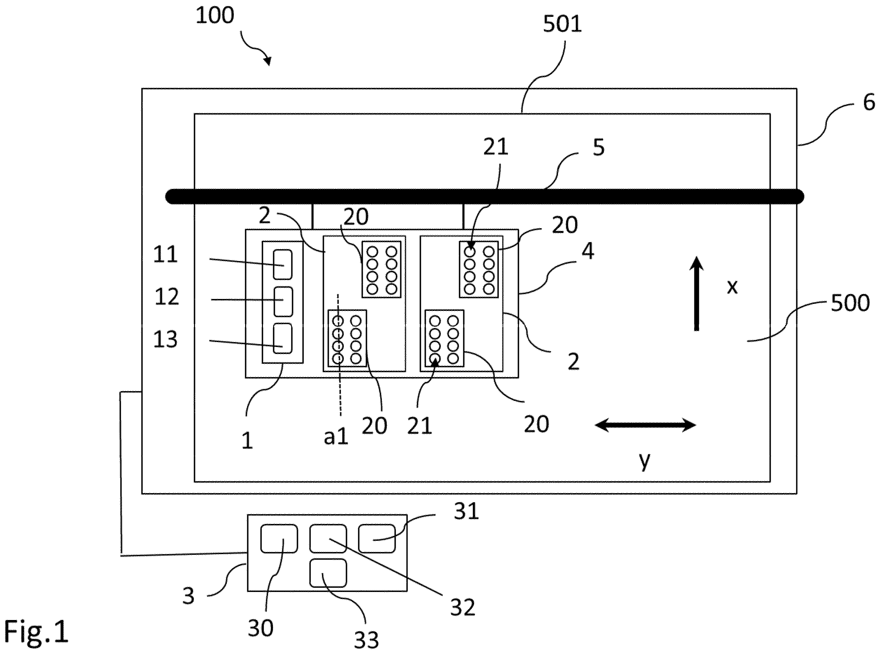

Fig. 1 shows a schematic depiction of an image-forming device 100 according to an embodiment of the present invention. The figure shows a particular embodiment, but it should be clear that the scope of the invention is not limited to it. The system of Fig. 1 comprises a sensor unit 1, two printheads 2, a controller unit 3, a printer carriage 4, a guide 5 and a working area 6.

The sensor unit 1 is an optoelectronic element containing a number of image sensors, either contact image sensors (CIS arrays) or reduction type linear sensors. Both types of sensors contain a plurality of chips (such as CCD chips 12 or CMOS chips 13) and light-emitting elements such as LEDs 11. For simplicity, in the figure these elements are depicted schematically and are meant to describe either CIS arrays or reduction type linear sensors, although both sensors are structurally different. Also for simplicity, the LEDs 11 are displayed side by side with the sensor chips 12,13, although they are actually flanking them. Both types of sensors also comprise lenses, which again for simplicity are not shown in the figure. The size of the sensor unit 1 depends on the application. It can vary from centimeters, e.g. in commercial printers, to tenths of centimeters, e.g. in applications for large-format printing. Likewise, the number of image sensors 12, 13 that it can contain varies depending on the application. In the figure, the sensor unit 1 is parallel to a direction x, i.e. the sensor is aligned (or: abutted, or: assembled) along the x-direction, and it is mainly used for the acquisition of images, which are acquired by scanning a recording material in swaths in a y direction. In certain embodiments the sensor unit 1 may be endowed with a processor and a number of executable programs to perform different tasks of image analysis, which include, but are not limited to, the determination of distances between imaged objects.

In an embodiment an image is formed by printing a plurality of subsequent swaths by moving the print head carriage 4 in the y direction and transporting the recording medium 500 between subsequent swaths in the x direction in a stepwise manner, such that in a subsequent swath a subsequent part of the image is printed. The x direction is also termed paper feed direction and the y direction is termed the scanning direction, referring to the scanning movement the carriage performs with respect to the print surface in the y direction.

In an embodiment, a recording medium 500 is positioned in a fixed position on the working area 6. Again an image is formed by printing a plurality of swaths in the y direction and moving the guide 5 (also termed guide rail, gantry) in the x direction in a stepwise manner in order to print the next adjacent swath.

Different print modes can be performed, such that multiple swaths entirely or partially overlap. With such print modes the print quality can be improved.

The printhead 2 is a structure that contains a number of printhead chips 20, with each comprising a number of nozzles 21. The number of printhead chips 20 in a printhead 2 can vary depending on the application. Fig.1 shows as an example two printheads 2 with two printhead chips 20 each, which are placed on diagonally opposed corners of the respective printheads 2. This location of the printhead chips 20 is also chosen for the sake of illustration. It should be understood that the invention is not limited to this particular arrangement. Each printhead chip 20 contains a number of nozzles 21. These nozzles 21 are arranged in arrays (rows and/or columns) and mounted on the printhead chip 20. It is common to name the nozzle columns generically as nozzle arrays. In Fig. 1 one can identify eight of these arrays, of which one of them is denoted as a1. In Fig.1 each printhead chip 20 contains, as an example, two nozzle arrays a1, each of the arrays comprising four nozzles 21. In conventional applications such as inkjet printers, these nozzles 21 are openings with diameters at the micron scale, through which the ink stored e.g. in ink cartridges (not shown in the figure) or ink tanks (not shown in the figure) can flow and be ejected onto a recording medium 500. A printhead chip 20 may contain hundreds or thousands of nozzles 21. The nozzles are in fluid connection with pressure generating chambers (not shown) equipped with an actuator (not shown) for generating a pressure wave in the pressure generating chambers resulting in the ejection of liquid droplets from the nozzles. The actuator may be a heater (in thermal inkjet, e.g. bubble jet principle) of a piezo electric element that deforms upon actuation.

The controller unit 3 controls the ejection time of the nozzles 21 in accordance with an image to be marked on the recording medium 500. In particular, the controller unit 3 is configured to output a calibration signal to adjust the ejection of marking material by the nozzles 21. In many preferred embodiments it may comprise a measuring module 30, a database 31, a data-processing module 32 and a calibration module 33. The measuring module 30 can determine positions of objects imaged by the sensor unit 1. These can be stored in the database 31 and further analyzed by the data-processing module 32. The data-processing module 32 is preferably configured to perform linear regressions and distance determinations. The calibration module 33 is configured to compensate for the misalignment of the sensor unit 1. All the modules in the controller unit 3 may be connected with each other, such that they can exchange data. In turn, the controller unit 3 is connected with the sensor unit 1 and the nozzles 21, with which it exchanges signals. This signal exchange can proceed wire bound or wireless, e.g. via wireless Ethernet. The controller unit 3 in Fig.1 is schematically shown as a separate element. However, in many embodiments it is desirable to have some, or all of their modules integrated within the sensor unit 1.

The printer carriage 4 is a structure into which the sensor unit 1 and/or the printheads 2 are embedded. The presence of a printer carriage 4 in some embodiments makes it easy to connect the printhead chips 20 to the ink tanks (not shown in the figure). In some embodiments it may be advantageous to have the sensor unit 1 on the same structure as the printheads 2.

The guide 5 is a structure which can either be static, such that in order to print the next swath, the recording medium 500 is moved in the x-direction with the aid of a medium transport system (not shown) of the guide 5 can move back and forth in the x direction. The printer carriage 4 may be mechanically connected to the guide 5, such that the printer carriage 4 can slide back and forth in the y direction (the swathing direction, also termed scanning direction). By using the guide one can easily move the sensor unit 1 and/or the printheads 2 to predetermined areas of the printing surface 6, either for scanning or printing purposes.

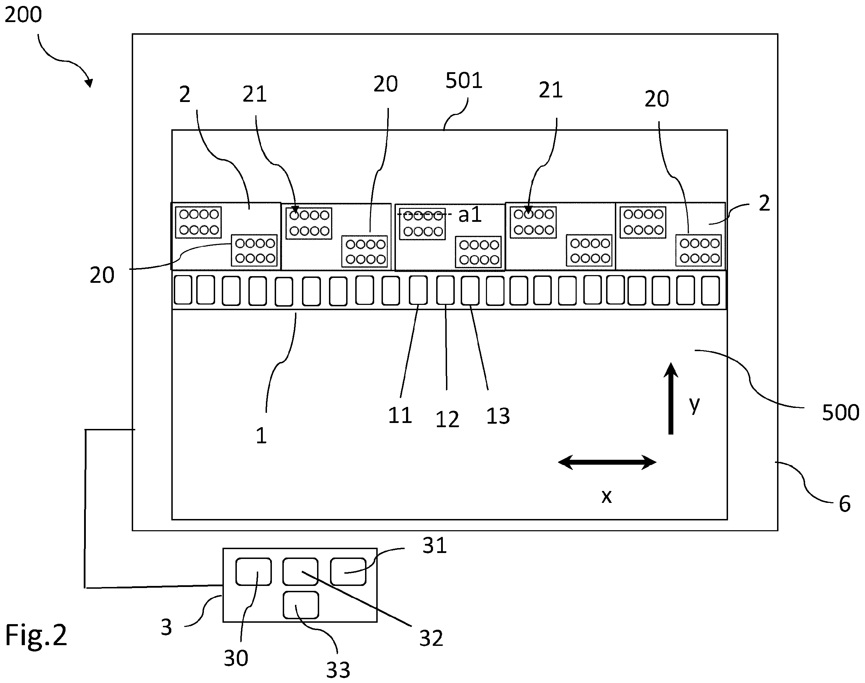

Fig. 2 shows a schematic depiction of an image-forming device 200 according to an embodiment of the present invention. The system of Fig. 2 comprises a sensor unit 1, a number of printheads 2, a controller unit 3 and a working area 6. In contrast to Fig. 1, the sensor unit 1 and the printheads 2 stretch along the whole width of the working area 6, i.e. they stretch along the whole size of the working area 6 in the x direction. Accordingly, as opposed to the embodiment depicted in Fig. 1, in the embodiment of Fig. 2 printing and scanning proceed without swathing. The configuration of Fig. 2, with page-wide nozzle arrays, is especially preferred for high-speed printing. A recording medium 500 (not shown in the figure) is placed on the working area 6 and fed into the image-forming device from the bottom of the figure, following the y- direction. The configuration of the printheads 2 (i.e. number of printhead chips 20, and number of nozzles 21 per nozzle array a1) is taken to be the same as Fig. 1, but there is nothing essential with this choice and the invention applies to general printhead 2 configurations. A mounting structure for the printheads 2 and the sensor unit 1 (analogous to the printer carriage 4 in Fig. 1) is not explicitly shown. Important in the context of the present invention is that the printheads 2 and the sensor unit 1 are arranged at fixed positions relative to one another.

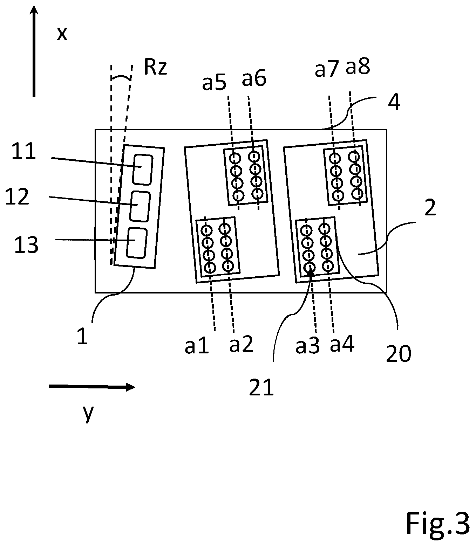

Fig. 3 shows a schematic depiction of a printer carriage 4, onto which a sensor unit 1 and two printhead chips 20 are mounted. This configuration, which is very similar to the printer carriage 4 depicted in Fig. 1, is chosen for illustrative purposes. Another configuration of sensor unit 1 and printhead chips 20, in particular a configuration close to what is depicted in Fig. 2, could have been chosen. In Fig. 3 potential misalignments of the sensor unit 1 and the printheads 2 are shown. In this configuration, alignment can be defined by having the direction of the sensor unit elements and the nozzle arrays parallel to the x-direction. These misalignments of the sensor unit 1 and the printheads 2 can occur during the assembly of the printer and have an impact on the scanning and printing quality. In Fig. 3, the sensor unit 1 has a tilt or skewness defined by the angle Rz, while the two printheads 2 are assumed to have the same tilt, given by another angle (not shown in the figure). The different nozzle arrays (also referred to as nozzle lines or nozzle columns) are denoted as a1 to a8. Also for simplicity, these arrays a1-a8 are assumed to have a common tilt. In practice, every nozzle array a1-a8, every printhead chip 20 and every printhead 2 can have a different tilt. In Fig. 3 these tilts have been exaggerated for the sake of illustration. For instance, in current applications, the tilt of the sensor unit 1 can be at the most 2 degrees.

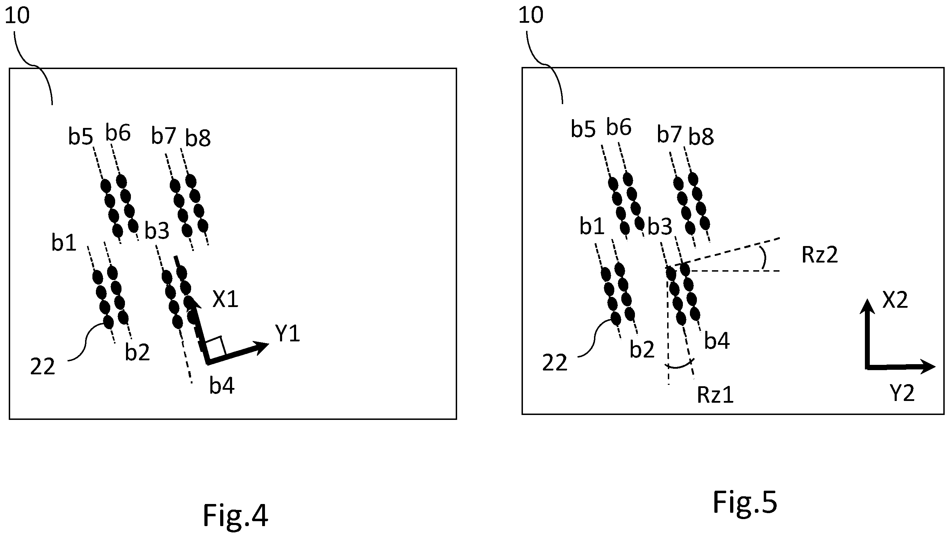

Fig. 4 is a schematic representation of an image 10 acquired by the sensor unit 1, based on the configuration of nozzles 21, printhead chips 20 and printheads 2 of Fig. 3. The acquired image 10 is a faithful acquisition of a reference pattern generated through the activation of a selected set of nozzles 21, which eject marking material (typically ink) on a recording medium 500. Fig. 4 depicts the corresponding image captured by the sensor unit 1. The pattern shown in Fig. 4 implies that here all the nozzles 21 depicted in Fig. 3 were selected and activated by the controller unit 3. The acquired image 10 (also scanned image 10) therefore contains the imaged marking material 22 (i.e. the image of the ink droplets left on the reference pattern) left by a one-time activation of the nozzles 21. The imaged nozzle arrays b1-b8 in Fig. 4 are the image, captured by the scanner unit 1, of the ink droplets ejected by the nozzle arrays a1-a8 of Fig. 3. Since the ejection angles of marking material by the nozzles might not be perfectly aligned in reality, one expects the marking material on the reference pattern to show a certain dispersion. Accordingly, the imaged nozzle lines b1-b8 should be understood as the result of an optimization procedure, e.g. a set of linear regressions involving the imaged marking material 22. The tilt of the imaged nozzle arrays b1-b8 is not scaled. It has been exaggerated for the purpose of clarity of the explanation.

Since Fig. 4 is a scanned image 10 of a reference pattern generated by simultaneously firing a preselected number of nozzles from each nozzle array shown in Fig. 3, the skewness of the sensor unit 1 appears as a systematic effect that affects the orientation of the imaged nozzle arrays b1-b8. This adds to the skewness caused by the misalignment of the printhead chips 20 in Fig. 3. For printing quality it is important to know with precision the distance between nozzle arrays. This can be achieved in an especially advantageous manner once the skewness of the sensor unit 1 is known. One of the inventive observations of the present patent is that this effect can be extracted from the scanned image 10 of Fig. 4 by determining the relative orientation of the imaged nozzle lines b1-b8 originating from the same printhead chip 20, with reference to a coordinate system that is determined from the scanned image 10 itself. The method of determination of the skewness of the sensor unit 1 is based on the following principles:

1) Nozzle arrays 21 in a single print head chip are considered to be perfectly aligned to one another, at least alignment errors would be very small, because these alignment errors are caused by the manufacturing process of the print head chips, which manufacturing process is very accurate and print head chips exceeding pre-determined alignment tolerances can be discarded in a quality control process;

2) Print head chips 20 are arranged in print heads 2 and mechanically aligned relative to one another within certain alignment tolerances which are expected to be larger than alignment tolerances in the print head chip manufacturing;

3) Multiple print heads 2 are arranged on a carriage or mounting structure and mechanically aligned relative to one another with certain alignment tolerances.

4) The sensor unit 1 is arranged in principle in parallel with the nozzle arrays 21 with a certain alignment tolerance. The sensor unit may either be arranged in a fixed position relative to the print heads (i.e. on the same mounting structure or carriage 4) or in a fixed parallel orientation with the print heads and a non-fixed relative distance between the sensor unit and the print heads (e.g. the sensor unit is mounted on a separate carriage (not shown) independently moving from the carriage carrying the print heads in the same direction) In other words, the distance between the sensor unit and the print heads may be static or dynamic, the parallel orientation of the sensor unit relative to the print heads is fixed.

If the sensor unit 1 (scanner) were perfectly aligned, the misalignment of the nozzle arrays 21 relative to one another (which equals the combined misalignment of the print heads and the misalignment of the print head chips in a printhead) could be directly determined from the scanned image 10.

The skewness of the sensor unit 1 adds to the misalignment of the imaged nozzle arrays in the scanned image 10.

The principle that is used in a method according to the present invention is based on the determination of the misalignment of two imaged nozzle arrays originating from nozzle arrays of the same print head chip with reference to a reference imaged nozzle array from a different (reference) print head chip. The determination of the misalignment is performed in two different ways in which the contribution of the misalignment of the sensor unit 1 is different, which is best explained with reference to Fig. 3: The skewness of the sensor unit 1 has a profound impact on the Y position of subsequent markers (also termed dots) in an imaged nozzle array. Referring to Fig. 3. the marker printed with the upper most nozzle of nozzle array a5 is detected earlier by the sensor unit than the marker printed with the nozzle located at the opposite end of nozzle array a5, leading to different detected Y positions. This detected misalignment is the result of both the misalignment of nozzle array a5 combined (i.e. added thereto) the misalignment of the sensor unit 1 and can be indicated with dY/X of an imaged nozzle array which can be determined by fitting a straight line through the markers of an imaged nozzle array by applying linear regression. With respect to a reference coordinate system, the angle between this dY/X and the X axis of that reference coordinate system can be determined and represents Rz1, which is the first misalignment parameter of the printhead chip. The skewness of the sensor unit 1 has a negligible effect on the X position of the printed markers. Therefore, any detected misalignment of imaged nozzle arrays originating from nozzle arrays arranged in the same printhead chip is caused by misalignment of the print head chip itself. This misalignment can be indicated with dX/Y within a single print head chip. With respect to a reference coordinate system the angle between this dX/Y and the Y axis of that reference coordinate system represents Rz2, which is the second misalignment parameter of the print head chip.

As described above, Rz1 is a first representation of the misalignment of a print head chip, which is a combination of the actual misalignment of the print head chip and the skewness of the sensor unit 1 and Rz2 is a second representation of the misalignment of the print head chip, in which the influence of the skewness of the sensor unit 1 is negligible. If the sensor unit would be perfectly aligned, Rz1 and Rz2 would therefore be equal. Because Rz1 and Rz2 are calculated with reference to an orthogonal reference coordinate system, the skewness of the sensor unit is determined by eliminating the effect of Rz2 from Rz1.

The reference coordinate system can be defined and determined in several ways:
We can take for reference the imaged nozzle arrays b3 and b4, which stem from the nozzle arrays a3 and a4 in the same printhead chip 20. We can take b4 as a reference imaged nozzle array defining the X1 axis. The Y1 axis is defined to be perpendicular to the X1 axis and hence has an orientation perpendicular to the reference imaged nozzle array b4 within the plane of the scanned image 10.

Taking this coordinate system as a reference, the skewness of the sensor unit 1 with respect to a reference (imaged) nozzle array can be determined and used for correction of the detected skewness (misalignment) of all other (imaged) nozzle arrays with respect to the reference (image) nozzle array. The misalignment can then be corrected by adapting the firing moment of individual nozzles in order to improve the image quality. The image may still be skewed relative to the recording medium 500, which depends on the skewness of the reference nozzle array with respect to the (aligned) recording medium 500 on the working area. Therefore, by using this reference coordinate system, image to sheet registration needs to be determined separately and corrected for.

If the boundaries of a scanned image can be detected, e.g. in cut sheet printing, the orientation of the sheet could be used to define the reference coordinate system, which is exemplified in Fig. 5: the reference coordinate system X2,Y2, wherein X2 and Y2 are parallel to the boundaries of the scanned image 50 and 51 respectively, which may be the edges of the sheet of recording medium 500. Then improvement of image quality and image to sheet registration can be performed in a single step.

Therefore, in an embodiment, the following subsequent steps are taken in order to determine the skewness of the sensor unit 1:

1. define a first reference imaged nozzle array (e.g. b4 in Fig. 4), which comprises an array of markers (also termed dots) simultaneously fired by nozzles of a reference nozzle array (e.g. a4 in Fig. 3);
2. determine the orientation of a corresponding reference coordinate system X1, Y1 by:

   a. fitting a straight line through the markers of the first reference imaged nozzle array (b4) by using linear regression. The fitted straight line represents the X1 axis of the reference coordinate system;
   b. the Y1 axis is perpendicular to the X1 axis and in the plane of the reference image 10;
   c. the opposing tip positions of the first reference nozzle array are determined, one of which (arbitrary) may be defined as the origin of the reference coordinate system.

3. select a print head chip 20 different from the chip comprising the nozzle array from which the reference imaged nozzle array originates (e.g. print head chip comprising nozzle arrays a1 and a2 or a5 and a6 or a7 and a8 in Fig. 3), and:

   a. fit straight lines through the markers of each of the imaged nozzle arrays of the selected print head chip 20 by applying linear regression;
   b. calculate the angles between the fitted straight lines through each of the selected imaged nozzle arrays with the reference X1 axis. These values are indicated as Rz1 values. The number of Rz1 values equals the number of (imaged) nozzle arrays from a print head chip 20;
   c. calculate the average Rz1 value for the selected print head chip 20;
   d. determine the relative X1 positions of all imaged nozzle arrays of the selected print head chip with reference to the reference coordinate system (X1, Y1). The method of determination of the relative X1 position of each imaged nozzle array is not limited, as long as the same method is used for all imaged nozzle arrays of the selected print head chip. For example the relative X1 positions of the opposing tips of each of the imaged nozzle arrays of the selected print head chip 20 relative to the reference coordinate system (X1, Y1) can be determined;
   e. fit a straight line through the determined relative X1 positions of all imaged nozzle arrays of the selected print head chip by applying linear regression;
   f. calculate the angle between the straight line determined in step 3e and the reference Y1 axis, this value indicates Rz2;
   g. calculate the Scanner Rz (i.e. skewness of the sensor unit 1) by calculating Rz1 + Rz2.

4. Optionally repeat step 3 for all print head chips 20 and average all obtained Rz values obtained in the above steps.

Skewness of the scanner is known with respect to the X1, Y1 coordinate system, i.e. with respect to the reference imaged nozzle array. Knowledge of this skewness enables correction of the skewness of all nozzle arrays with respect to the reference nozzle array.

As stated above (step 4.) this procedure can be repeated for all of the printhead chips 20. In Fig. 4, this means that the skewness of the sensor unit 1 can be found from b1 and b2, b3 and b4, b5 and b6 or b7 and b8. By averaging out the values found from each pair of imaged nozzle arrays b1-b8, a precise determination of the skewness of the sensor unit 1 can be achieved. Importantly, with this methodology the skewness of the sensor unit 1 can be determined regardless of the skewness of each printhead chip 20, which, as mentioned above, does not need to be the same for the different printhead chips 20.

Once the value of the skewness of the sensor unit 1 has been determined, the controller unit 3 may output a calibration signal to adjust the ejection of marking material by the nozzles 21 in Fig. 3.

Fig. 5 shows the same reference image 10 as Fig. 4 but the internal reference frame (X2,Y2) is now defined by the boundaries of the reference image. Fig. 5 shows a tilt of the imaged nozzle arrays b1-b8, which is described by the two angles Rz1 and Rz2. Rz1 is the rotation of the image nozzle arrays b1-b8 with respect to a X2 direction, while Rz2 is the rotation of the image nozzle arrays b1-b8 with respect to a Y2 direction orthogonal to the X2 direction. The X2 and Y2 directions defined in Fig. 5 provide a reference frame for the positions of the objects of scanner image 10. The X2 direction and the Y2 direction may, but do not necessarily, coincide with the x direction and the y direction depicted in Figs. 1 and 2, since the sensor unit 1 may be tilted by the angle Rz shown in Fig. 3.

This tilt or skewness of the sensor unit 1 is also responsible for the fact that Rz1 and Rz2 are not necessarily the same. If the sensor unit 1 were aligned, Rz1 and Rz2 would have the same value, which would coincide with the tilt of the nozzle arrays a1 to a8 in Fig. 3. In the scanned image 10, information on the misalignment angle Rz of the sensor unit 1 is present. In particular, the tilt of the imaged nozzle arrays b1-b8 in Fig. 5 is not the same as the tilt of the nozzle arrays a1-a8 in Fig. 3.

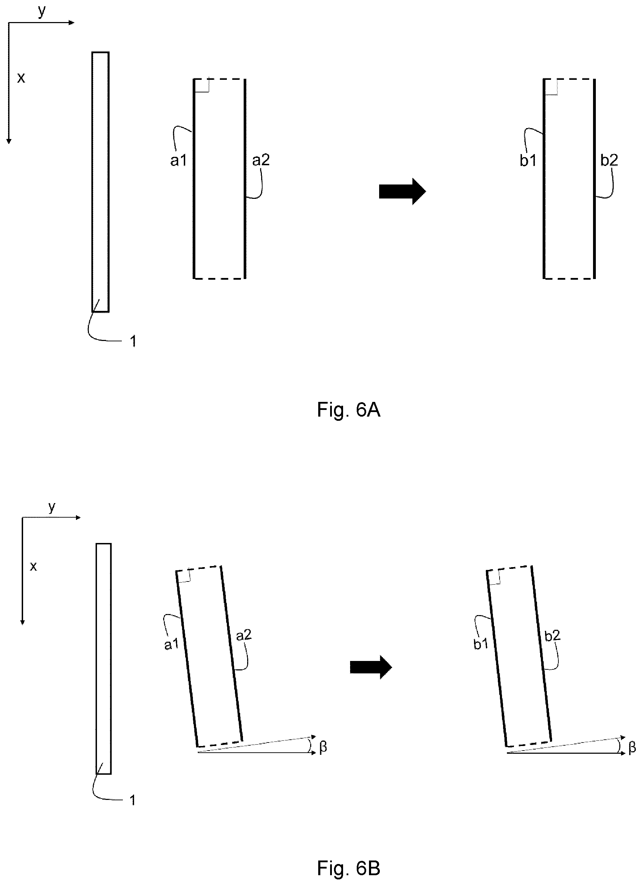

The effect of Rz can be best understood by considering four simplified scenarios depicted in Figs. 6A to 6D. All scenarios are described based on two parallel rows of nozzles forming a perfect rectangle (for example arranged in a single printhead chip 20). In all scenario's a sensor unit 1 and the two parallel rows of nozzles are arranged with an orientation relative to a reference coordinate system (x,y).

Fig 6A shows a first scenario wherein the two rows of nozzles a1,a2 and the sensor unit 1 are perfectly aligned with respect to the reference coordinate system (x,y). A reference image is created by simultaneously firing a preselected number of nozzles from both rows of nozzles (including the first and last nozzles of each row, which define the corners of the rectangle). The printed image is subsequently scanned with the sensor unit 1. The detected image (shown on the right side of Fig. 6A) comprises two imaged nozzle arrays b1, b2 and remains a rectangle.

Fig 6B shows a second scenario, wherein the two rows of nozzles a1, a2 are tilted (misaligned, skewed) at an angle $\beta$ with respect to the reference coordinate system (x,y), while the sensor unit 1 is perfectly aligned with the reference coordinate system (x,y). The detected image (shown on the right side of Fig. 6B) comprises two imaged nozzle arrays b1, b2 and remains a rectangle that is tilted at an angle $\beta$ with respect to the reference coordinate system.

Therefore, the misalignment of the two rows of nozzles (e.g. a print head chip) mainly causes the detected image to be tilted.

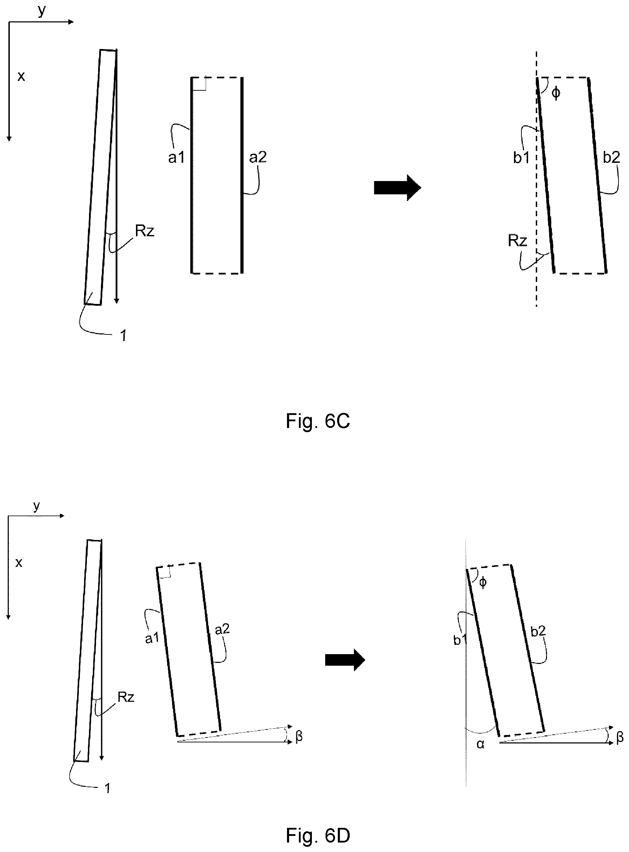

Fig. 6C shows a third scenario, wherein the two rows of nozzles a1, a2 are perfectly aligned with respect to the reference coordinate system (x,y), while the sensor unit 1 is misaligned with respect to the reference coordinate system, in particular tilted with respect to the x-axis by angle Rz. The printed image remains a rectangle that is perfectly aligned with the reference coordinate system. The detected image (shown on the right side of Fig. 6C) comprises imaged nozzle arrays b1,b2 and is a parallelogram defined by said two tilted imaged nozzle arrays (rows of dots). The detected x-positions of the dots are virtually unaffected by the misalignment of the sensor unit, at least for small tilt angles (Rz).

Therefore, the misalignment of the sensor unit 1 mainly causes deformation of the detected image (rectangle becomes a parallelogram)

Fig. 6D shows a fourth scenario, wherein the two rows of nozzles a1,a2 and the sensor unit 1 are both misaligned with respect to the reference coordinate system (x,y): the sensor unit at an angle Rz with the x-axis, and the two nozzle arrays at an angle $\beta$ with respect to the y-axis. The effects of misalignment of the nozzle rows ($\beta$) and the misalignment of the sensor unit 1 (Rz) add up in this scenario. Hence, the detected image (shown on the right side of Fig. 6B) is a tilted parallelogram. The deformation from a rectangle to a parallelogram is mainly caused by the misalignment of the sensor unit 1 (Rz) as described in the third scenario shown in Fig. 6C. The tilt is mainly caused by the misalignment of the two rows of nozzles as described in the second scenario and shown in Fig. 6B. In this particular example, $Rz = \alpha-\beta$.

The above scenarios also apply for different arrangements of the two rows of nozzles relative to one another, as long as the relative positions of the two rows of nozzles are fixed and known.

Based on this knowledge, inventors have found that by analyzing a detected reference image created by two rows of nozzles that are correlated to one another (i.e. in a known and fixed arrangement to one another, for example two parallel rows of nozzles arranged in a single print head chip) with reference to basically any internal reference coordinate system (X,Y), the misalignment of the sensor unit 1 (Rz) can be determined.

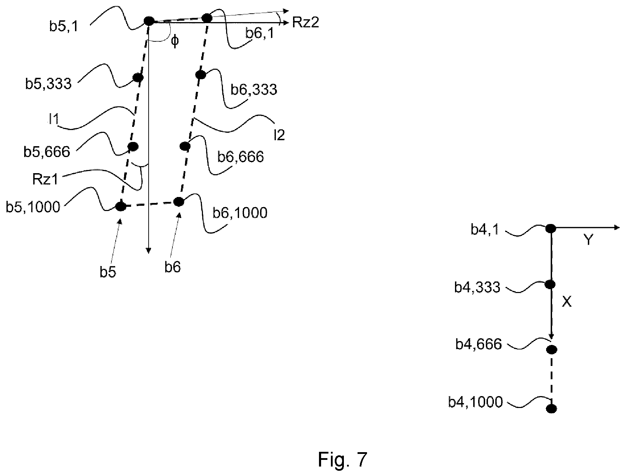

Fig. 7 shows a simplified representation of a detected reference image comprising the imaged nozzle array (row of dots) b4, similar to the one shown in Fig. 4 and two imaged nozzle arrays (rows of dots) b5 and b6 originating from two nozzle arrays a5 and a6 arranged in a single print head chip. Imaged nozzle array b4 is defined to be the reference imaged nozzle array which is printed with the reference nozzle array a4 which is contained in a print head chip different from the printhead chip containing nozzle arrays a5 and a6. Imaged nozzle array b4 defines the X-axis of the internal reference coordinate system. The Y-axis of the internal reference coordinate system is perpendicular to the X-axis. As an example all nozzle arrays have 1000 nozzles, of which 4 are shown, nozzles 1, 333, 666 and 1000. The exemplified nozzle distance is 20 $\mu$m (approximately corresponding to 1200 npi (nozzles per inch).

Determine internal reference coordinate system: Select origin, for example the first nozzle of imaged nozzle array b4, b4,1. Determine the position of the last nozzle of imaged nozzle array b4, b4,1000: the x-position equals 999 times the nozzle distance, which is 19980 $\mu$m, the y-position is assumed to be 0. A straight line connecting the first nozzle (b4,1) and the last nozzle (b4,1000) represents an initial X-axis of the internal reference coordinate system. The Y-axis is perpendicular thereto, which means that the dot product of the vector representations of the X-axis and the Y-axis equals 0. In order to eliminate print artefacts like side shooting nozzles, linear regression can be applied to the initially determined X-axis and the initially determined X-axis can be corrected. Mathematical techniques suitable for obtaining an accurate X-axis are known in the art. Once the X-axis of the reference coordinate system has been determined, the Y-axis is set perpendicular thereto. Many additional parameters can be used to further improve the accuracy of the reference coordinate system. These will not be discussed here, and the present invention is not limited to the method described here to determine the internal reference coordinate system.

Once the internal reference coordinate system has been determined, the coordinates (X,Y) of all imaged nozzles (dots) of all imaged nozzle arrays (b5 and b6) can be determined with reference to the determined internal reference coordinate system. Again, within an imaged nozzle array, linear regression can be applied to improve the accuracy (i.e. eliminate or at least minimize the effects of print artefacts). With reference to Fig. 7, the determined coordinates with respect to the internal reference coordinate system are given in Table 1. Linear regression is applied to both imaged nozzle arrays, with the additional condition these lines must be in parallel (i.e. have the same directional coefficients (dY/dX), because the imaged nozzle arrays (b5 and b6) originate from nozzle arrays a5 and a6 which are comprised in the same print head chip and hence at fixed positions relative to one another. Table 1 further shows line l1, Y=pX+q1 fitted through dots b5,1; b5,333, b5,666 and b5,1000 of imaged nozzle array b5 and line l2, Y=pX+q2 fitted through dot b6,1; b6,333, b6,666 and b6,1000 of imaged nozzle array b6. Corrected Y-coordinates (Y^) of the detected dots are also given in Table 1.

In accordance with an embodiment of the method according to the present invention, dots d1, d2, and d3 are determined: d1 is dot b5,1. This dot originates from the first nozzle of nozzle array a5, i.e. at one end of nozzle array a5; d2 is dot b5.1000. This dot originates from the last nozzle of nozzle array a5, arranged at the opposite end of nozzle array a5; d3 is dot b6,1. This dot originates from the first nozzle of nozzle array a6. The corrected coordinates of dots d1, d2 and d3 are summarized in Table 2.

Table 1: detected coordinates of imaged nozzle arrays b5 and b6 and corrected coordinates by linear regression

|    |        |        | l1   | Y=pX+q1 |
|----|--------|--------|------|---------|
|    |        |        | p    | -0.01   |
|    |        |        | q1   | -4999.7 |
|    | dot    | X      | Y    | Y^      |
| d1 | b5,1   | -20000 | -4797.4 | -4799.7 |
|    | b5,333 | -13360 | -4871.6 | -4866.1 |
|    | b5,666 | -6700  | -4922.4 | -4932.7 |
| d2 | b5,1000| -20    | -5006.6 | -4999.5 |
|    |        |        |      |         |
|    |        |        | l2   | Y=pX+q2 |
|    |        |        | p    | -0.01   |
|    |        |        | q2   | -4000.3 |
|    | dot    | X      | Y    | Y^      |
| d3 | b6,1   | -20020 | -3802.4 | -3800.1 |
|    | b6,333 | -13380 | -3861   | -3866.5 |
|    | b6,666 | -6720  | -3943.4 | -3933.1 |
|    | b6,1000| -40    | -3992.8 | -3999.9 |

Table 2 : summary of (dot) positions required for calculating Rz (and Rz1 and Rz2)

| di | Xi | Yi |
|---|---|---|
| d1 | -20000 | -4799.7 |
| d2 | -20 | -4999.5 |
| d3 | -20020 | -3800.1 |

With reference to Fig. 7 it is stated that : φ = Rz1+Rz2+90° and Rz=Rz1+Rz2 = 90°-φ. φ is an angle of the parallelogram formed by the imaged nozzle arrays b5 and b6 and can be determined by the cosine rule as explained below.

In a next step the position vectors of the second dot d2, $\vec{u} = (u1, u2)$ and the third dot d3, $\vec{v} = (v1, v2)$, relative to the first dot d1 and relative to the internal reference orthogonal coordinate system (X,Y) are calculated, wherein u1=X2-X1, u2=Y2-Y1, v1=X3-X1 and v2=Y3-Y1 are calculated:

$$\vec{u} = (u1, u2) = (-20 - [-20000], -4999.5 - [-4799.7]) = (19980, -199.8)$$

$$\vec{v} = (v1, v2) = (-20020 - [-20000], -3800.1 - [-4799.7]) = (-20, 999.6)$$

$$|\vec{u}| = \sqrt{19980^2 + (-199.8)^2} = 19981$$

$$|\vec{v}| = \sqrt{(-20)^2 + 999.6^2} = 999.8$$

$$\vec{u}.\vec{v} = 19980 * (-20) + (-199.8) * 999.6 = -599320.08$$

$$\varphi = arccos\left(\frac{-599320.08}{19981 * 999.8}\right) = arccos(-0.03) = 91.72°$$

$$Rz = 90° - \varphi = 90° - 91.72° = -1.72°$$

In an alternative embodiment of the method according to the present invention Rz1 and Rz2 are calculated based on the corrected coordinates of the detected dots and Rz is calculated as the sum of Rz1 and Rz2:

$$Rz1 = arctan\left(\frac{Y2 - Y1}{X2 - X1}\right) = \arctan\left(\frac{-4999.5 - [-4799.7]}{-20 - [-20000]}\right) = \arctan(-0.01) = -0.57°$$

$$Rz2 = arctan\left(\frac{X3 - X1}{Y3 - Y1}\right) = arctan\left(\frac{-20020 - [-20000]}{-3800.1 - [-4799.7]}\right) = \arctan(-0.02) = -1.15°$$

$$Rz = Rz1 + Rz2 = -0.57° + -1.15° = -0.72°$$

The signs of the obtained Rz1, Rz2 and Rz represent the orientation of the misalignment with respect to the internal reference coordinate system. As can be deduced from the above exemplified calculations, both embodied methods lead to the same result for Rz.

The determination of the angle Rz as described above can also be applied in situations where the printhead chips 20 have different misalignment tilts or in situations where the nozzle arrays a1-a8 have different shapes. In all these cases, Rz2 and Rz1 might be different depending on the array considered. However, in all cases Rz can be determined from Rz2 and Rz1.

The determination of the angle Rz can be equally well performed with the reference frame (X1,Y1) of Fig. 4 or the reference frame (X2,Y2) of Fig. 5. The important element is that the objects used for such a determination (i.e. the imaged nozzle lines b1-b8) are objects internal to the image-forming device.

Once the value of the skewness of the sensor unit 1 has been determined, the controller unit 3 may output a calibration signal to adjust the ejection of marking material by the nozzles 21 in Fig. 3.

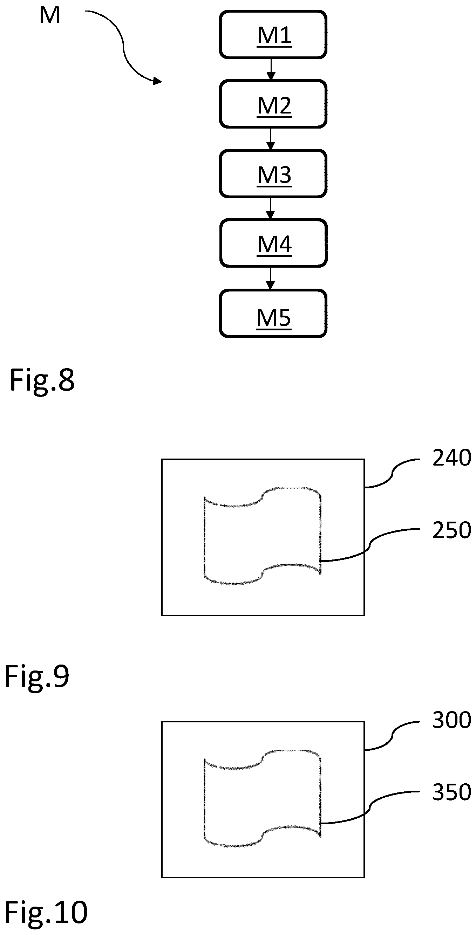

Fig. 8 is a block diagram, where the different steps of a method M to calibrate a sensor unit of an image-forming device are schematically illustrated. This method M can for example be applied to the sensor unit 1 of the image-forming device 100 or 200.

In a step M1, a reference pattern is generated on a recording medium 500 with a marking material by activating a set of selected nozzles 21 of the structure of nozzles arrays a1-a8. For instance, one could use as a reference pattern a one-time printing of all or only part of the nozzles 21 shown in Fig. 3.

In a step M2, an image 10 of the generated reference pattern is acquired by the sensor unit 1 of the image-forming device 100 or 200. As an example, if the system of Fig. 3 was used to generate the reference pattern, by activating all the nozzles 21 one would schematically obtain the scanned imaged 10 of Figs. 4 and 5.

In a step M3, the imaged nozzles rows b1-b8 are identified from the imaged marking material within the scanned imaged 10 of Figs. 4 and 5, preferably by performing a set of linear regressions.

In a step M4, one determines the relative orientation of the imaged nozzle rows b1-b8 originating from the same printhead chip 20. With this information, the misalignment angle Rz of the sensor unit can be determined based on geometrical properties of the scanned image 10. For instance, in Fig. 5 the misalignment angle Rz was determined based on the determination of angles Rz2 and Rz1.

In a step M5, a calibration signal is generated to adjust the ink ejection times of the different nozzle arrays in the printhead 2. The calibration signal is based on the misalignment of the different nozzle arrays in the printhead 2. The misalignment of the sensor unit 1 is eliminated (i.e. not considered) in the calibration signal, because the misalignment of the sensor unit 1 is not a print artefact, but a detection artefact. In other words, the misalignment of the sensor unit should not be used to adjust the ink ejection times of the different nozzle arrays.

Fig. 9 shows a schematic block diagram illustrating a computer program product 240 according to an embodiment of the third aspect of the present invention. The computer program product 240 comprises executable program code 250 configured to, when executed, perform the method according to any embodiment of the second aspect of the present invention, in particular as has been described with respect to the preceding figures.

Fig. 10 shows a schematic block diagram illustrating a non-transitory computer-readable data storage medium 300 according to an embodiment of the fourth aspect of the present invention. The data storage medium 300 comprises executable program code 350 configured to, when executed, perform the method according to any embodiment of the second aspect of the present invention, in particular as has been described with respect to the preceding figures.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

The invention is defined in the appended claims.

**Claims**

1. Method for calibrating an image forming device (100; 200) comprising at least one printhead (2) comprising a plurality of nozzles (21) arranged in a plurality of nozzle rows (a1-a8), the plurality of nozzle rows comprises a first row of nozzles (a1, a3, a5, a7) and a second row of nozzles (a2, a4, a6, a8), the first row of nozzles and second row of nozzles being substantially parallel to one another, the image forming device (100; 200) comprises a sensor unit (1) extending in a first direction and configured to reads information from a recording medium (500) on a working area (6), the first row of nozzles and second row of nozzles are arranged at fixed positions relative to one another, the first direction is substantially parallel to the first row of nozzles and to the second row of nozzles, the method comprising the steps of:

   a) providing the recording medium (500) on the working area (6);
   b) printing an image comprising a plurality of dots by simultaneously activating a preselected set of nozzles, the preselected nozzles at least including a first nozzle n1 and a second nozzle n2 being arranged at each opposing end of the first row of nozzles (a1, a3, a5, a7) and a third nozzle n3 being arranged at one end of the second row of nozzles (a2, a4, a6, a8), the one end of the second row of nozzles being the end closest to the first nozzle n1 of the first row of nozzles (a1, a3, a5, a7);
   c) scanning the printed image of a plurality of dots at least including a first dot d1 printed with the first nozzle n1, a second dot d2 printed with the second nozzle n2, a third dot d3 printed with the third nozzle n3;

   **characterised in that** the method further comprises the steps of:

   d) determining the relative positions of the plurality of dots relative to an internal reference orthogonal coordinate system (X,Y): d1 = (X1,Y1), d2 = (X2,Y2) and d3 = (X3,Y3), wherein X1, X2 and X3 are X-coordinates and Y1, Y2 and Y3 are Y-coordinates of dots d1, d2 and d3 respectively;

e) determining the position vectors of the second dot d2, $\vec{u} = (u1, u2)$ and the third dot d3, $\vec{v} = (v1, v2)$, relative to the first dot d1 and relative to the internal reference orthogonal coordinate system (X,Y), wherein u1=X2-X1, u2=Y2-Y1, v1=X3-X1 and v2=Y3-Y1;

f) calculating the misalignment Rz of the sensor unit relative to first row of nozzles and the second row of nozzles according to formula: $Rz = 90° - arccos\left(\frac{\vec{u}.\vec{v}}{|\vec{u}||\vec{v}|}\right)$, wherein $\vec{u}.\vec{v}$ is the dot product of the position vectors $\vec{u}$ and $\vec{v}$, which equals u1*v1+u2*v2 and wherein $|\vec{u}| = \sqrt{u1^2 + u2^2}$ and $|\vec{v}| = \sqrt{v1^2 + v2^2}$.

2. Method according to claim 1, wherein the calculation of the misalignment Rz of the sensor unit (1) relative to the first row of nozzles (a1, a3, a5, a7) and the second row of nozzles (a2, a4, a6, a8) is performed with the following sub-steps:

   f1) calculating

   $$Rz1 = arctan\left(\frac{Y2-Y1}{X2-X1}\right);$$

   f2) calculating

   $$Rz2 = arctan\left(\frac{X3-X1}{Y3-Y1}\right);$$

   f3) calculating

   $$Rz = Rz1 + Rz2$$

3. Method according to any one of the preceding claims, wherein in the printing step b) the preselected set of nozzles comprises a first subset S1 of nozzles arranged in the first row of nozzles (a1, a3, a5, a7) and a second subset S2 of nozzles arranged in the second row of nozzles (a2, a4, a6, a8), wherein a first row of dots (b1, b3, b5, b7) is printed by the first row of nozzles (a1, a3, a5, a7) and a second row of dots (b2, b4, b6, b8) is printed by the second row of nozzles (a2, a4, a6, a8) and wherein the method comprises a step d1) performed directly after step d) comprising fitting a first straight line l1 through the first row of dots (b1, b3, b5, b7) and a second straight line l2 through the second row of dots (b2, b4, b6, b8) with the aid of linear regression followed by correcting the relative Y-positions of the detected dots of the first row with the first straight line l1 and by correcting the relative Y-positions of the detected dots of the second row of dots with the second straight line l2, wherein step d1 is performed prior to step e) and wherein step e) is performed with the corrected relative positions of the detected dots.

4. Method according to any one of the preceding claims, wherein all method steps are repeated for all substantially parallel pairs of rows of nozzles (a1-a2; a3-a4; a5-a6; a7-a8) and calculating the average Rz.

5. Method according to any one of the preceding claims, wherein the internal reference orthogonal coordinate system (X,Y) is determined by a reference row of dots printed with a reference row of nozzles, wherein the reference row of dots extends in the X-direction and defines the X-axis of the internal reference orthogonal coordinate system (X,Y), wherein the Y-axis extends in a direction perpendicular to the X-axis.

6. Method according to claim 5 wherein the reference row of nozzles comprises one row of nozzles selected from the plurality of nozzle rows (a1-a8).

7. Method according to any one of claims 1-4, wherein the internal orthogonal coordinate system (X,Y) is defined by the boundaries of the acquired image.

8. Method according to claim 7 wherein the boundaries of the acquired image comprise the edges of the recording medium (500).

9. Method according to claim 8, wherein the image forming device (200) is a page-wide array printer comprising a page-wide array of at least one print head (2) and a page wide sensing unit (1), wherein a leading edge (501) of the recording medium (500) defines the X-axis of the internal orthogonal coordinate system (X,Y) and wherein the Y-axis extends in a direction perpendicular to the X-axis.

10. Method according to claim 8, wherein the image forming device (100) is a scanning printer comprising a carriage (4) comprising the at least one printhead (2) and the sensing unit (1), the image is formed by a reciprocating motion of the carriage (4) across the recording medium (500), wherein a leading edge (501) of the recording medium (500) defines the Y-axis of the internal orthogonal coordinate system (X,Y) and wherein the X-axis extends in a direction perpendicular to the Y-axis.

11. Method according to any one of the preceding claims, further comprising the steps of:

g) determining the real relative positions of the plurality of dots relative to the internal reference orthogonal coordinate system (X,Y) by performing a correction for the misalignment (Rz) of the sensor unit (1);

h) compare the real relative positions of the plurality of dots with the expected relative positions of the dots;

i) determine timing corrections for the activation of each individual nozzle of the plurality of nozzles corresponding to the respective individual dot of the plurality of dots to minimize the difference between the real relative position of said individual dot and the expected position of said individual dot.

12. An image-forming device (100; 200) suitable for performing the method according to claim 1 comprising:

- at least one print head (2), arranged for carrying out step b and comprising a plurality of nozzles (21) arranged in a plurality of nozzle rows (a1-a8), the plurality of nozzle rows comprises a first row of nozzles (a1, a3, a5, a7) and a second row of nozzles (a2, a4, a6, a8), the first row of nozzles and second row of nozzles being substantially parallel to one another (a1 and a2, a3 and a4, a5 and a6, a7 and a8);

- a sensor unit (1), arranged for carrying out step c and extending in a first direction and configured to read information from a recording medium (500) placed on a working area (6),

the first row of nozzles and second row of nozzles are arranged at fixed positions relative to one another, the first direction is substantially parallel to the first row of nozzles and to the second row of nozzles, the image-forming device further comprises:

- a controller unit (3), which is configured to control ejection of marking material by the nozzles (21) onto the recording medium (500);

wherein:

the controller unit (3) is configured to simultaneously activate a preselected set of nozzles, the preselected nozzles at least includes a first nozzle n1 and a second nozzle n2 being arranged at each opposing end of the first row of nozzles and a third nozzle n3 being arranged at one end of the second row of nozzles, the one end of the second row of nozzle being the end closest to the first nozzle n1 of the first row, to eject marking material onto the recording medium (500), thereby generating a reference pattern which the sensor unit (1) is configured to capture as a reference image (10), wherein the sensor unit (1) is further configured to identify the printed image of a plurality of dots at least including a first dot d1 printed with the first nozzle n1, a second dot d2 printed with the second nozzle n2, a third dot d3 printed with the third nozzle n3, wherein the controller unit (3) is configured to carry out steps d, e and f:

d) determine the relative positions of the plurality of dots relative to an internal reference orthogonal coordinate system (X,Y): d1 = (X1,Y1), d2 = (X2,Y2) and d3 = (X3,Y3), wherein X1, X2 and X3 are X-coordinates and Y1, Y2 and Y3 are Y-coordinates of dots d1, d2 and d3 respectively;

e) determine the position vectors of the second dot d2, $\vec{u} = (u1, u2)$ and the third dot d3, $\vec{v} = (v1, v2)$, relative to the first dot d1 and relative to the internal reference orthogonal coordinate system (X,Y), wherein u1=X2-X1, u2=Y2-Y1, v1=X3-X1 and v2=Y3-Y1;

f) calculate the misalignment (Rz) of the sensor unit relative to first row of nozzles and the second row of nozzles: $Rz = 90° - arccos\left(\frac{\vec{u}.\vec{v}}{|\vec{u}||\vec{v}|}\right)$, wherein $\vec{u}.\vec{v}$ is the dot product of the position vectors $\vec{u}$ and $\vec{v}$,

which equals u1*v1+u2*v2 and wherein $|\vec{u}| = \sqrt{u1^2 + u2^2}$ and $|\vec{v}| = \sqrt{v1^2 + v2^2}$.

13. The image-forming device (100; 200) according to claim 12, wherein the controller unit (3) is further configured for performing a method according to any one of claims 2-11.

**14.** The image-forming device (100; 200) according to claim 13, wherein the controller unit (3) is further configured for outputting timing corrections for the activation of each individual nozzle of the plurality of nozzles as determined in step i) of claim 11.

**15.** The image-forming device (100; 200) according to any one of claims 12-14, wherein the at least one print head (2) comprises at least one print head chip (20), the at least one print head chip comprises at least the first row of nozzles (a1, a3, a5, a7) and the second row of nozzles (a2, a4, a6, a8), the first row of nozzles and second row of nozzles being substantially parallel to one another.

**Patentansprüche**

**1.** Verfahren zum Kalibrieren einer Bilderzeugungsvorrichtung (100; 200), die mindestens einen Druckkopf (2) umfasst, der eine Vielzahl von Düsen (21) aufweist, die in einer Vielzahl von Düsenreihen (a1-a8) angeordnet sind, wobei die Vielzahl von Düsenreihen eine erste Düsenreihe (a1, a3, a5, a7) und eine zweite Düsenreihe (a2, a4, a6, a8), wobei die erste Düsenreihe und die zweite Düsenreihe im Wesentlichen parallel zueinander verlaufen, wobei die Bilderzeugungsvorrichtung (100; 200) umfasst eine Sensoreinheit (1), die sich in einer ersten Richtung erstreckt und so konfiguriert ist, dass sie Informationen von einem Aufzeichnungsmedium (500) auf einem Arbeitsbereich (6) liest, wobei die erste Düsenreihe und die zweite Düsenreihe an festen Positionen relativ zueinander angeordnet sind, die erste Richtung im Wesentlichen parallel zur ersten Düsenreihe und zur zweiten Düsenreihe verläuft, wobei das Verfahren die folgenden Schritte umfasst:

a) Bereitstellen des Aufzeichnungsmediums (500) auf dem Arbeitsbereich (6);
b) Drucken eines Bildes, das eine Vielzahl von Punkten umfasst, durch gleichzeitiges Aktivieren eines vorgewählten Satzes von Düsen, wobei die vorgewählten Düsen mindestens eine erste Düse n1 und eine zweite Düse n2 umfassen, die an jedem gegenüberliegenden Ende der ersten Düsenreihe (a1, a3, a5, a7) angeordnet sind, sowie eine dritte Düse n3, die an einem Ende der zweiten Düsenreihe (a2, a4, a6, a8) angeordnet ist, wobei das eine Ende der zweiten Düsenreihe das der ersten Düse n1 der ersten Düsenreihe (a1, a3, a5, a7) am nächsten liegende Ende ist;
c) Abtasten des gedruckten Bildes aus einer Vielzahl von Punkten, das zumindest einen ersten Punkt d1, der mit der ersten Düse n1 gedruckt wurde, einen zweiten Punkt d2, der mit der zweiten Düse n2 gedruckt wurde, und einen dritten Punkt d3, der mit der dritten Düse n3 gedruckt wurde, umfasst; **dadurch gekennzeichnet, dass** das Verfahren ferner die folgenden Schritte umfasst:

d) Bestimmen der relativen Positionen der mehreren Punkte relativ zu einem internen orthogonalen Referenzkoordinatensystem (X, Y): d1 = (X1,Y1), d2 = (X2,Y2) und d3 = (X3,Y3), wobei X1, X2 und X3 die X-Koordinaten und Y1, Y2 und Y3 die Y-Koordinaten der Punkte d1, d2 bzw. d3 sind;
e) Bestimmen der Positionsvektoren des zweiten Punktes d2, $\vec{u}$ = ($u1$,$u2$), und des dritten Punktes d3, $\vec{v}$ = ($v1$,$v2$), relativ zum ersten Punkt d1 und relativ zum internen orthogonalen Referenzkoordinatensystem (X,Y), wobei u1=X2-X1, u2=Y2-Y1, v1=X3-X1 und v2=Y3-Y1;
f) Berechnen der Fehlausrichtung Rz der Sensoreinheit relativ zur ersten Düsenreihe und zur zweiten Düsenreihe gemäß der Formel: $Rz = 90° - arccos\left(\frac{\vec{u}.\vec{v}}{|\vec{u}||\vec{v}|}\right)$ , wobei $\vec{u}.\vec{v}$ das Skalarprodukt der Positionsvektoren $\vec{u}$ *and* $\vec{v}$ ist, das gleich u1*v1+u2*v2 ist, und wobei $|\vec{u}| = \sqrt{u1^2 + u2^2}$ und $|\vec{v}| = \sqrt{v1^2 + v2^2}$ .

**2.** Verfahren nach Anspruch 1, wobei die Berechnung der Fehlausrichtung Rz der Sensoreinheit (1) relativ zur ersten Düsenreihe (a1, a3, a5, a7) und zur zweiten Düsenreihe (a2, a4, a6, a8) mit den folgenden Teilschritten durchgeführt wird:

f1) Berechnung von

$$Rz1 \; = \; arctan\left(\frac{Y2-Y1}{X2-X1}\right);$$

f2) Berechnung von

$$Rz2 \; = \; arctan\left(\frac{X3-X1}{Y3-Y1}\right);$$

f3) Berechnung von

$$Rz = Rz1 + Rz2$$

3. Verfahren nach einem der vorstehenden Ansprüche, wobei im Druckschritt b) der vorgewählte Satz von Düsen eine erste Teilmenge S1 von Düsen, die in der ersten Düsenreihe (a1, a3, a5, a7) angeordnet sind, und eine zweite Teilmenge S2 von Düsen, die in der zweiten Düsenreihe (a2, a4, a6, a8) umfasst, wobei eine erste Punktreihe (b1, b3, b5, b7) von der ersten Düsenreihe (a1, a3, a5, a7) gedruckt wird und eine zweite Punktreihe (b2, b4, b6, b8) von der zweiten Düsenreihe (a2, a4, a6, a8) gedruckt wird, und wobei das Verfahren einen Schritt d1) umfasst, der unmittelbar nach Schritt d) durchgeführt wird und das Anpassen einer ersten Geraden l1 durch die erste Punktreihe (b1, b3, b5, b7) sowie einer zweiten Geraden l2 durch die zweite Punktreihe (b2, b4, b6, b8) mittels linearer Regression, gefolgt von einer Korrektur der relativen Y-Positionen der erfassten Punkte der ersten Reihe anhand der ersten Geraden l1 und einer Korrektur der relativen Y-Positionen der erfassten Punkte der zweiten Reihe anhand der zweiten Geraden l2, wobei Schritt d1 vor Schritt e) durchgeführt wird und wobei Schritt e) mit den korrigierten relativen Positionen der erfassten Punkte durchgeführt wird.

4. Verfahren nach einem der vorstehenden Ansprüche, wobei alle Verfahrensschritte für alle im Wesentlichen parallelen Paare von Düsenreihen (a1-a2; a3-a4; a5-a6; a7-a8) wiederholt werden und der Mittelwert von Rz berechnet wird.

5. Verfahren nach einem der vorstehenden Ansprüche, wobei das interne orthogonale Referenzkoordinatensystem (X, Y) durch eine Referenzpunktreihe bestimmt wird, die mit einer orthogonal dazu angeordneten Referenzdüsenreihe gedruckt ist, wobei sich die Referenzpunktreihe in X-Richtung erstreckt und die X-Achse des internen orthogonalen Referenzkoordinatensystems (X, Y) definiert, wobei sich die Y-Achse in einer Richtung senkrecht zur X-Achse erstreckt.

6. Verfahren nach Anspruch 5, wobei die Referenzdüsenreihe eine aus der Vielzahl von Düsenreihen (a1-a8) ausgewählte Düsenreihe umfasst.

7. Verfahren nach einem der Ansprüche 1 bis 4, wobei das interne orthogonale Koordinatensystem (X, Y) durch die Begrenzungen des erfassten Bildes definiert ist.

8. Verfahren nach Anspruch 7, wobei die Begrenzungen des erfassten Bildes die Ränder des Aufzeichnungsmediums (500) umfassen.

9. Verfahren nach Anspruch 8, wobei die Bilderzeugungsvorrichtung (200) ein seitenbreiter Array-Drucker ist, der ein seitenbreites Array aus mindestens einem Druckkopf (2) und eine seitenbreite Erfassungseinheit (1) umfasst, wobei eine Vorderkante (501) des Aufzeichnungsmediums (500) die X-Achse des internen orthogonalen Koordinatensystems (X, Y) definiert und wobei sich die Y-Achse in einer Richtung senkrecht zur X-Achse erstreckt.

10. Verfahren nach Anspruch 8, wobei die Bilderzeugungsvorrichtung (100) ein Scandrucker ist, der einen Schlitten (4) umfasst, der den mindestens einen Druckkopf (2) und die Abtasteinheit (1) enthält, das Bild durch eine Hin- und Herbewegung des Schlittens (4) über das Aufzeichnungsmedium (500) erzeugt wird, wobei eine Vorderkante (501) des Aufzeichnungsmediums (500) die Y-Achse des internen orthogonalen Koordinatensystems (X, Y) definiert und wobei sich die X-Achse in einer Richtung senkrecht zur Y-Achse erstreckt.

11. Verfahren nach einem der vorstehenden Ansprüche, das ferner die folgenden Schritte umfasst:

g) Bestimmen der tatsächlichen relativen Positionen der Vielzahl von Punkten relativ zum internen orthogonalen Referenzkoordinatensystem (X, Y) durch Ausführen einer Korrektur für die Fehlausrichtung (Rz) der Sensoreinheit (1);

h) Vergleichen der tatsächlichen relativen Positionen der Vielzahl von Punkten mit den erwarteten relativen Positionen der Punkte;

i) Ermitteln von Zeitkorrekturen für die Aktivierung jeder einzelnen Düse der Vielzahl von Düsen, die dem jeweiligen einzelnen Punkt der Vielzahl von Punkten entspricht, um die Differenz zwischen der tatsächlichen relativen Position des einzelnen Punkts und der erwarteten Position des einzelnen Punkts zu minimieren.

12. Bildgebungsvorrichtung (100; 200), die zur Durchführung des Verfahrens gemäß Anspruch 1 geeignet ist, mit:

- mindestens einen Druckkopf (2), der zur Durchführung von Schritt b ausgelegt ist und eine Vielzahl von Düsen (21) umfasst, die in einer Vielzahl von Düsenreihen (a1-a8) angeordnet sind, wobei die Vielzahl von Düsenreihen eine erste Düsenreihe (a1, a3, a5, a7) und eine zweite Düsenreihe (a2, a4, a6, a8), wobei die erste Düsenreihe und die zweite Düsenreihe im Wesentlichen parallel zueinander verlaufen (a1 und a2, a3 und a4, a5 und a6, a7 und a8);

- eine Sensoreinheit (1), die zur Durchführung von Schritt c angeordnet ist, sich in einer ersten Richtung erstreckt und so konfiguriert ist, dass sie Informationen von einem auf einem Arbeitsbereich (6) platzierten Aufzeichnungsmedium (500) liest,

wobei die erste Düsenreihe und die zweite Düsenreihe an festen Positionen relativ zueinander angeordnet sind, die erste Richtung im Wesentlichen parallel zur ersten Düsenreihe und zur zweiten Düsenreihe verläuft, und die Bilderzeugungsvorrichtung ferner umfasst:

- eine Steuereinheit (3), die dazu ausgelegt ist, den Ausstoß von Markierungsmaterial durch die Düsen (21) auf das Aufzeichnungsmedium (500) zu steuern;

wobei:

die Steuereinheit (3) so konfiguriert ist, dass sie gleichzeitig einen vorgewählten Satz von Düsen aktiviert, wobei die vorgewählten Düsen mindestens eine erste Düse n1 und eine zweite Düse n2 umfassen, die an jedem gegenüberliegenden Ende der ersten Düsenreihe angeordnet sind, sowie eine dritte Düse n3, die an einem Ende der zweiten Düsenreihe angeordnet ist, wobei das eine Ende der zweiten Düsenreihe das der ersten Düse n1 der ersten Reihe am nächsten liegende Ende ist, um Markierungsmaterial auf das Aufzeichnungsmedium (500) auszustoßen und dadurch ein Referenzmuster zu erzeugen, das die Sensoreinheit (1) als Referenzbild (10) zu erfassen, wobei die Sensoreinheit (1) ferner dazu ausgelegt ist, das gedruckte Bild einer Vielzahl von Punkten zu identifizieren, das mindestens einen ersten Punkt d1, der mit der ersten Düse n1 gedruckt wurde, einen zweiten Punkt d2, der mit der zweiten Düse n2 gedruckt wurde, und einen dritten Punkt d3, der mit der dritten Düse n3 gedruckt wurde, umfasst, wobei die Steuereinheit (3) dazu ausgelegt ist, die Schritte d, e und f auszuführen:

a) Bestimmen der relativen Positionen der Vielzahl von Punkten relativ zu einem internen orthogonalen Referenzkoordinatensystem (X, Y): d1 = (X1,Y1), d2 = (X2,Y2) und d3 = (X3,Y3), wobei X1, X2 und X3 die X-Koordinaten und Y1, Y2 und Y3 die Y-Koordinaten der Punkte d1, d2 bzw. d3 sind;

b) Ermitteln der Positionsvektoren des zweiten Punktes d2, $\vec{u} = (u1, u2)$, und des dritten Punktes d3, $\vec{v} = (v1, v2)$, relativ zum ersten Punkt d1 und relativ zum internen orthogonalen Referenzkoordinatensystem (X,Y), wobei u1=X2-X1, u2=Y2-Y1, v1=X3-X1 und v2=Y3-Y1;

c) Berechnen der Fehlausrichtung (Rz) der Sensoreinheit relativ zur ersten Düsenreihe und zur zweiten Düsenreihe: $Rz = 90° - arccos\left(\frac{\vec{u}.\vec{v}}{|\vec{u}||\vec{v}|}\right)$, wobei. $\vec{v}$ das Skalarprodukt der Positionsvektoren $\vec{u}$ and $\vec{v}$ ist,

das gleich u1*v1+u2*v2 ist, und wobei $|\vec{u}| = \sqrt{u1^2 + u2^2}$ und $|\vec{v}| = \sqrt{v1^2 + v2^2}$ .

13. Die Bilderzeugungsvorrichtung (100; 200) gemäß Anspruch 12, wobei die Steuereinheit (3) ferner dazu ausgelegt ist, ein Verfahren gemäß einem der Ansprüche 2 bis 11 durchzuführen.

14. Die Bilderzeugungsvorrichtung (100; 200) nach Anspruch 13, wobei die Steuereinheit (3) ferner dazu ausgelegt ist, Zeitkorrekturen für die Aktivierung jeder einzelnen Düse der Vielzahl von Düsen auszugeben, wie in Schritt i) von Anspruch 11 bestimmt.

15. Die Bilderzeugungsvorrichtung (100; 200) gemäß einem der Ansprüche 12-14, wobei der mindestens eine Druckkopf (2) mindestens einen Druckkopfchip (20) umfasst, der mindestens eine Druckkopfchip mindestens die erste Düsenreihe (a1, a3, a5, a7) und die zweite Düsenreihe (a2, a4, a6, a8) umfasst, wobei die erste Düsenreihe und die zweite Düsenreihe im Wesentlichen parallel zueinander verlaufen.

**Revendications**

1. Procédé de calibrage d'un dispositif de formation d'images (100 ; 200) comprenant au moins une tête d'impression (2) comportant une pluralité de buses (21) disposées en une pluralité de rangées de buses (a1-a8), la pluralité de rangées de buses comprenant une première rangée de buses (a1, a3, a5, a7) et une deuxième rangée de buses (a2, a4, a6, a8), la première rangée de buses et la deuxième rangée de buses étant sensiblement parallèles l'une à l'autre, le dispositif de formation d'images (100 ; 200) comprend une unité de capteur (1) s'étendant dans une première direction et configurée pour lire des informations à partir d'un support d'enregistrement (500) sur une zone de travail (6), la première rangée de buses et la deuxième rangée de buses sont disposées à des positions fixes l'une par rapport à l'autre, la première direction est sensiblement parallèle à la première rangée de buses et à la deuxième rangée de buses, le procédé comprenant les étapes consistant à :

   a) fournir le support d'enregistrement (500) sur la zone de travail (6) ;
   b) imprimer une image comprenant une pluralité de points en activant simultanément un ensemble présélectionné de buses, les buses présélectionnées comprenant au moins une première buse n1 et une deuxième buse n2 disposées à chaque extrémité opposée de la première rangée de buses (a1, a3, a5, a7) et une troisième buse n3 disposée à une extrémité de la deuxième rangée de buses (a2, a4, a6, a8), ladite une extrémité de la deuxième rangée de buses étant l'extrémité la plus proche de la première buse n1 de la première rangée de buses (a1, a3, a5, a7) ;
   c) balayer l'image imprimée constituée d'une pluralité de points comprenant au moins un premier point d1 imprimé par la première buse n1, un deuxième point d2 imprimé par la deuxième buse n2, un troisième point d3 imprimé par la troisième buse n3 ; **caractérisé en ce que** le procédé comprend en outre les étapes consistant à :

   d) déterminer les positions relatives de la pluralité de points par rapport à un système de coordonnées orthogonales de référence interne (X, Y) : d1 = (X1,Y1), d2 = (X2,Y2) et d3 = (X3,Y3), où X1, X2 et X3 sont les coordonnées X et Y1, Y2 et Y3 sont les coordonnées Y des points d1, d2 et d3 respectivement ;
   e) déterminer les vecteurs de position du deuxième point d2, $\vec{u} = (u1, u2)$, et du troisième point d3, $\vec{v} = (v1, v2)$, par rapport au premier point d1 et par rapport au système de coordonnées orthogonales de référence interne (X, Y), où u1 = X2 - X1, u2 = Y2 - Y1, v1 = X3 - X1 et v2 = Y3 - Y1 ;
   f) calculer le désalignement Rz de l'unité de capteur par rapport à la première rangée de buses et à la deuxième rangée de buses selon la formule : $Rz = 90° - arccos\left(\frac{\vec{u}.\vec{v}}{|\vec{u}||\vec{v}|}\right)$ , où $\vec{u}.\vec{v}$ est le produit scalaire des vecteurs de position $\vec{u}$ and $\vec{v}$, qui est égal à

$$u1*v1+u2*v2, \text{ et où} |\vec{u}| = \sqrt{u1^2 + u2^2} \text{ et} |\vec{v}| = \sqrt{v1^2 + v2^2}.$$

2. Procédé selon la revendication 1, dans lequel le calcul du désalignement Rz de l'unité de capteur (1) par rapport à la première rangée de buses (a1, a3, a5, a7) et à la deuxième rangée de buses (a2, a4, a6, a8) est effectué selon les sous-étapes suivantes :

   f1) calculer

$$Rz1 = arctan\left(\frac{Y2-Y1}{X2-X1}\right);$$

   f2) calculer

$$Rz2 = arctan\left(\frac{X3-X1}{Y3-Y1}\right);$$

   f3) calculer

$$Rz = Rz1 + Rz2$$

3. Procédé selon l'une quelconque des revendications précédentes, dans lequel, lors de l'étape d'impression b), l'ensemble présélectionné de buses comprend un premier sous-ensemble S1 de buses disposées dans la première rangée de buses (a1, a3, a5, a7) et un deuxième sous-ensemble S2 de buses disposées dans la deuxième rangée de buses (a2, a4, a6, a8), dans lequel une première rangée de points (b1, b3, b5, b7) est imprimée par la première rangée de buses (a1, a3, a5, a7) et une deuxième rangée de points (b2, b4, b6, b8) est imprimée par la deuxième rangée de buses (a2, a4, a6, a8) et dans lequel le procédé comprend une étape d1) effectuée directement après l'étape d) consistant à ajuster une première droite l1 passant par la première rangée de points (b1, b3, b5, b7) et une deuxième droite l2 passant par la deuxième rangée de points (b2, b4, b6, b8) à l'aide d'une régression linéaire, suivie de la correction des positions Y relatives des points détectés de la première rangée par rapport à la première droite l1 et de la correction des positions Y relatives des points détectés de la deuxième rangée de points par rapport à la deuxième droite l2, l'étape d1 étant effectuée avant l'étape e) et l'étape e) étant effectuée avec les positions relatives corrigées des points détectés.

4. Procédé selon l'une quelconque des revendications précédentes, dans lequel toutes les étapes du procédé sont répétées pour toutes les paires de rangées de buses sensiblement parallèles (a1-a2 ; a3-a4 ; a5-a6 ; a7-a8) et le calcul de la valeur moyenne de Rz.

5. Procédé selon l'une quelconque des revendications précédentes, dans lequel le système de coordonnées orthogonales de référence interne (X, Y) est déterminé par une rangée de référence de points imprimée avec une rangée de référence d' s, dans lequel la rangée de référence de points s'étend dans la direction X et définit l'axe X du système de coordonnées orthogonales de référence interne (X, Y), et dans lequel l'axe Y s'étend dans une direction perpendiculaire à l'axe X.

6. Procédé selon la revendication 5, dans lequel la rangée de buses de référence comprend une rangée de buses choisie parmi la pluralité de rangées de buses (a1-a8).

7. Procédé selon l'une quelconque des revendications 1 à 4, dans lequel le système de coordonnées orthogonales interne (X, Y) est défini par les limites de l'image acquise.

8. Procédé selon la revendication 7, dans lequel les limites de l'image acquise comprennent les bords du support d'enregistrement (500).

9. Procédé selon la revendication 8, dans lequel le dispositif de formation d'images (200) est une imprimante à matrice de page comprenant une matrice de page d'au moins une tête d'impression (2) et une unité de détection de page (1), dans lequel un bord avant (501) du support d'enregistrement (500) définit l'axe X du système de coordonnées orthogonales interne (X, Y) et dans lequel l'axe Y s'étend dans une direction perpendiculaire à l'axe X.

10. Procédé selon la revendication 8, dans lequel le dispositif de formation d'image (100) est une imprimante à balayage comprenant un chariot (4) comportant ladite au moins une tête d'impression (2) et l'unité de détection (1), l'image est formée par un mouvement de va-et-vient du chariot (4) sur le support d'enregistrement (500), dans lequel un bord avant (501) du support d'enregistrement (500) définit l'axe Y du système de coordonnées orthogonales interne (X, Y) et dans lequel l'axe X s'étend dans une direction perpendiculaire à l'axe Y.

11. Procédé selon l'une quelconque des revendications précédentes, comprenant en outre les étapes consistant à :

g) déterminer les positions relatives réelles de la pluralité de points par rapport au système de coordonnées orthogonales de référence interne (X, Y) en effectuant une correction du désalignement (Rz) de l'unité de détection (1) ;
h) comparer les positions relatives réelles de la pluralité de points avec les positions relatives attendues des points ;
i) déterminer des corrections de synchronisation pour l'activation de chaque buse individuelle parmi la pluralité de buses correspondant au point individuel respectif parmi la pluralité de points afin de minimiser la différence entre la position relative réelle dudit point individuel et la position attendue dudit point individuel.

12. Dispositif de formation d'images (100 ; 200) adapté pour mettre en œuvre le procédé selon la revendication 1, comprenant :

- au moins une tête d'impression (2), agencée pour exécuter l'étape b et comprenant une pluralité de buses (21) disposées en une pluralité de rangées de buses (a1-a8), la pluralité de rangées de buses comprenant une première rangée de buses (a1, a3, a5, a7) et une deuxième rangée de buses (a2, a4, a6, a8), la première rangée de buses et la deuxième rangée de buses étant sensiblement parallèles l'une à l'autre (a1 et a2, a3 et a4, a5 et a6, a7 et a8) ;

- une unité de capteur (1), agencée pour exécuter l'étape c et s'étendant dans une première direction, et configurée pour lire des informations à partir d'un support d'enregistrement (500) placé sur une zone de travail (6), la première rangée de buses et la deuxième rangée de buses étant disposées à des positions fixes l'une par rapport à l'autre, la première direction étant sensiblement parallèle à la première rangée de buses et à la deuxième rangée de buses, le dispositif de formation d'images comprenant en outre :

- une unité de commande (3), qui est configurée pour commander l'éjection de matériau de marquage par les buses (21) sur le support d'enregistrement (500) ;

dans lequel :

l'unité de commande (3) est configurée pour activer simultanément un ensemble présélectionné de buses, les buses présélectionnées comprenant au moins une première buse n1 et une deuxième buse n2 disposées à chacune des extrémités opposées de la première rangée de buses et une troisième buse n3 disposée à une extrémité de la deuxième rangée de buses, ladite une extrémité de la deuxième rangée de buses étant l'extrémité la plus proche de la première buse n1 de la première rangée, afin d'éjecter du matériau de marquage sur le support d'enregistrement (500), générant ainsi un motif de référence que l'unité de détection (1) est configurée pour capturer en tant qu'image de référence (10), dans lequel l'unité de capteur (1) est en outre configurée pour identifier l'image imprimée d'une pluralité de points comprenant au moins un premier point d1 imprimé par la première buse n1, un deuxième point d2 imprimé par la deuxième buse n2, un troisième point d3 imprimé par la troisième buse n3, dans lequel l'unité de commande (3) est configurée pour exécuter les étapes d, e et f :

a) déterminer les positions relatives de la pluralité de points par rapport à un système de coordonnées orthogonales de référence interne (X, Y) : d1 = (X1, Y1), d2 = (X2, Y2) et d3 = (X3, Y3), où X1, X2 et X3 sont les coordonnées X et Y1, Y2 et Y3 sont les coordonnées Y des points d1, d2 et d3 respectivement ;

b) déterminer les vecteurs de position du deuxième point d2, $\vec{u} = (u1, u2)$, et du troisième point d3, $\vec{v} = (v1, v2)$, par rapport au premier point d1 et par rapport au système de coordonnées orthogonales de référence interne (X, Y), où u1 = X2 - X1, u2 = Y2 - Y1, v1 = X3 - X1 et v2 = Y3 - Y1 ;

c) calculer le désalignement (Rz) de l'unité de capteur par rapport à la première rangée de buses et à la deuxième rangée de buses : $Rz = 90° - arccos\left(\frac{\vec{u}.\vec{v}}{|\vec{u}||\vec{v}|}\right)$, où $\vec{u}.\vec{v}$ est le produit scalaire des vecteurs de position $\vec{u}$ and $\vec{v}$, qui est égal à u1*v1+u2*v2, et où $|\vec{u}| = \sqrt{u1^2 + u2^2}$ et $|\vec{v}| = \sqrt{v1^2 + v2^2}$ .

13. Dispositif de formation d'images (100 ; 200) selon la revendication 12, dans lequel l'unité de commande (3) est en outre configurée pour mettre en œuvre un procédé selon l'une quelconque des revendications 2 à 11.

14. Dispositif de formation d'images (100 ; 200) selon la revendication 13, dans lequel l'unité de commande (3) est en outre configurée pour fournir des corrections de synchronisation pour l'activation de chaque buse individuelle parmi la pluralité de buses, telles que déterminées à l'étape i) de la revendication 11.

15. Dispositif de formation d'images (100 ; 200) selon l'une quelconque des revendications 12 à 14, dans lequel la au moins une tête d'impression (2) comprend au moins une puce de tête d'impression (20), la au moins une puce de tête d'impression comprend au moins la première rangée de buses (a1, a3, a5, a7) et la deuxième rangée de buses (a2, a4, a6, a8), la première rangée de buses et la deuxième rangée de buses étant sensiblement parallèles l'une à l'autre.

Fig.1

EP 4 605 245 B1

Fig.2

Fig.3

EP 4 605 245 B1

Fig.4

Fig.5

EP 4 605 245 B1

Fig. 6A

Fig. 6B

Fig. 6C

Fig. 6D

Fig. 7

M

M1

M2

M3

M4

M5

Fig.8

240

250

Fig.9

300

350

Fig.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012071474 A
- US 6263117 B1
- US 20120200632 A
- DE 102019106548 A1
- US 20190166274 A1
- EP 1503573 B1